(19) **Europäisches Patentamt European Patent Office Office européen des brevets**

(11) **EP 4 152 850 B1**

(12) **EUROPEAN PATENT SPECIFICATION**

(45) Date of publication and mention of the grant of the patent:
**01.04.2026 Bulletin 2026/14**

(21) Application number: **21803311.6**

(22) Date of filing: **07.05.2021**

(51) International Patent Classification (IPC):
*H04W 72/04* (2023.01)   *H04W 76/10* (2018.01)

(52) Cooperative Patent Classification (CPC):
**H04W 72/23; H04L 5/0053; H04L 5/0094; H04W 4/06;** H04W 4/70

(86) International application number:
**PCT/JP2021/017429**

(87) International publication number:
**WO 2021/230139 (18.11.2021 Gazette 2021/46)**

(54) **COMMUNICATION DEVICE AND COMMUNICATION METHOD**

KOMMUNIKATIONSVORRICHTUNG UND KOMMUNIKATIONSVERFAHREN

DISPOSITIF DE COMMUNICATION ET PROCÉDÉ DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.05.2020 JP 2020085554**

(43) Date of publication of application:
**22.03.2023 Bulletin 2023/12**

(73) Proprietor: **Sony Group Corporation Tokyo 108-0075 (JP)**

(72) Inventors:
• **KUSASHIMA, Naoki Tokyo 108-0075 (JP)**
• **SHIMEZAWA, Kazuyuki Tokyo 108-0075 (JP)**
• **SHARMA, Vivek Weybridge, Surrey KT130XW (GB)**
• **ATUNGSIRI, Samuel Asangbeng Weybridge, Surrey KT130XW (GB)**

(74) Representative: **Witte, Weller & Partner Patentanwälte mbB Postfach 10 54 62 70047 Stuttgart (DE)**

(56) References cited:
EP-A1- 3 991 337   EP-A1- 4 136 913
WO-A1-2021/190510   US-A1- 2022 304 014

US-A1- 2023 156 752   US-A1- 2023 209 542

• ERICSSON: "Summary of email discussion on NR-Light", vol. TSG RAN, no. Newport Beach, US; 20190916 - 20190919, 9 September 2019 (2019-09-09), XP051782678, Retrieved from the Internet <URL:http://www.3gpp.org/ftp/tsg_ran/ TSG_RAN/TSGR_85/Docs/RP-192160.zip> [retrieved on 20190909]
• "5G; NR; Physical layer procedures for control (3GPP TS 38.213 version 15.4.0 Release 15)", vol. 3GPP RAN, no. V15.4.0, 18 April 2019 (2019-04-18), pages 1 - 106, XP014345022, Retrieved from the Internet <URL:http://www. etsi.org/deliver/etsi_ts/138200_138299/138213/ 15.04.00_60/ts_138213v150400p.pdf> [retrieved on 20190418]
• ERICSSON: "Summary of email discussion on NR-Light", 3GPP DRAFT; RP-192160 SUMMARY OF EMAIL DISCUSSION ON NR-LIGHT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG RAN, no. Newport Beach, US; 20190916 - 20190919, 9 September 2019 (2019-09-09), Mobile Competence Centre ; 650, route des Lucioles ; F-06921 Sophia-Antipolis Cedex ; France , XP051782678

EP 4 152 850 B1

- LENOVO, MOTOROLA MOBILITY: "On UE complexity reduction features", 3GPP DRAFT; R1-2003828, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. E-meeting; 20200525 - 20200605, 15 May 2020 (2020-05-15), Mobile Competence Centre ; 650, route des Lucioles ; F-06921 Sophia-Antipolis Cedex ; France , XP051885599

**Description**

Field

The present disclosure relates to a communication device and a communication method.

Background

A radio access scheme and wireless network of cellular mobile communication (hereinafter, also referred to as "Long Term Evolution (LTE)", "LTE-Advanced (LTE-A)", "LTE-Advanced Pro (LTE-A Pro)", "5th generation (5G)", "New Radio (NR)", "New Radio Access Technology (NRAT)", "Evolved Universal Terrestrial Radio Access (EUTRA)", or "Further EUTRA (FEUTRA)") has been studied in 3rd Generation Partnership Project (3GPP). Note that, in the following description, the LTE includes the LTE-A, the LTE-A Pro, and the EUTRA, and the NR includes the NRAT and the FEUTRA. In the LTE and the NR, a base station device (base station) is also referred to as evolved NodeB (eNodeB) in the LTE and is also referred to as gNodeB (gNB) in the NR, and a terminal device (mobile station, mobile station device, or terminal) is also referred to as user equipment (UE). The LTE and the NR are cellular communication systems in which a plurality of areas covered by a base station are arranged in a cell shape. A single base station may manage a plurality of cells.

The NR is a next-generation radio access scheme for the LTE, and is a radio access technology (RAT) different from the LTE. The NR is an access technology that can support various use cases including enhanced mobile broadband (eMBB), massive machine type communications (mMTC), and ultra reliable and low latency communications (URLLC). The NR has been studied for a technical framework that addresses usage scenarios, requirements, arrangement scenarios, and the like in those use cases.

On the other hand, there is a demand for extension of the NR to use cases such as industrial wireless sensors, surveillance cameras, and wearable devices. These use cases require a new type of low end device (which can be referred to as a low-capability NR device or an NR-light device) that has lower performance, device cost, and complexity than high-end eMBB and URLLC, and maintains several years of battery life, but meets higher service requirements than LPWA (for example, LTE-M/NB-IOT). Details of the low-capability NR device are disclosed in RP-193238, "New SID on support of reduced capability NR devices," 3GPP TSG RAN Meeting #86, December 2019 and RP-190844, "NR-Lite for Rel-17 Qualcomm views," 3GPP TSG RAN Meeting #84, June 2019.

WO 2021/190510 A1 and US 2023/209542 A1 disclose a method of initial access in wireless communications and related device.
EP 3 991 337 A1 and US 2022/304014 A1 relate to co-existence of legacy and low-bandwidth coreset-0.
EP 4 136 913 A1 and US 2023/156752 A1 relate to control resource set zero for reduced capability new radio devices.
Ericsson et al., RP-192160, "Summary of email discussion on NR-Light", 3GPP TSG RAN Meeting #85, September 2019, agenda item 8.2.1, provide a summary of email discussion on NR-Light.

Summary

Technical Problem

However, how the above-described low-capability NR device performs an initial access procedure has not been studied.

Therefore, the present disclosure provides a communication device and a communication method capable of performing an initial access procedure even in a case where a low-capability NR device is mixed.

It should be noted that the above-mentioned problem or purpose is only one of a plurality of problems or purposes that can be solved or achieved by a plurality of embodiments disclosed in the present specification.

Solution to Problem

The claimed subject matter is defined in the appended independent claims. Further refinements are provided in the dependent claims.

According to the present disclosure, a communication device is provided. The communication device includes a communication unit and a control unit. The communication unit monitors a PBCH to receive a signal. The control unit determines which one of first CORESET configuration and second CORESET configuration is to be applied to perform communication based on one or more bits included in the signal received on the PBCH. The communication unit monitors a secondary PBCH for receiving the second CORESET configuration based on the one or more bits to receive a second signal.

Brief Description of Drawings

FIG. 1 is a diagram illustrating an example of an overall configuration of a communication system according to an embodiment of the present disclosure.

FIG. 2 is a diagram illustrating an example of a synchronization signal/physical broadcast channel (SS/PBCH) block.

FIG. 3 is a diagram illustrating an arrangement example of SS/PBCH blocks.

FIG. 4 is a diagram illustrating an example of an information element (IE) of a master information block (MIB).

FIG. 5 is a diagram illustrating an example of the IE of the MIB.

FIG. 6 is a diagram illustrating a configuration example of messages of a broadcast control channel (BCCH) and a broadcast channel (BCH).

FIG. 7A is a diagram illustrating a table used for control resource set (CORESET) #0 configuration.

FIG. 7B is a diagram illustrating a table used for the CORESET #0 configuration.

FIG. 7C is a diagram illustrating a table used for the CORESET #0 configuration.

FIG. 7D is a diagram illustrating a table used for the CORESET #0 configuration.

FIG. 7E is a diagram illustrating a table used for the CORESET #0 configuration.

FIG. 7F is a diagram illustrating a table used for the CORESET #0 configuration.

FIG. 7G is a diagram illustrating a table used for the CORESET #0 configuration.

FIG. 7H is a diagram illustrating a table used for the CORESET #0 configuration.

FIG. 7I is a diagram illustrating a table used for the CORESET #0 configuration.

FIG. 7J is a diagram illustrating a table used for the CORESET #0 configuration.

FIG. 7K is a diagram illustrating a table used for the CORESET #0 configuration.

FIG. 7L is a diagram illustrating a table used for the CORESET #0 configuration.

FIG. 8A is a diagram illustrating a table used for physical downlink control channel (PDCCH) monitoring occasion configuration for a Type0-PDCCH CSS set.

FIG. 8B is a diagram illustrating a table used for the PDCCH monitoring occasion configuration for the Type0-PDCCH CSS set.

FIG. 8C is a diagram illustrating a table used for the PDCCH monitoring occasion configuration for the Type0-PDCCH CSS set.

FIG. 8D is a diagram illustrating a table used for the PDCCH monitoring occasion configuration for the Type0-PDCCH CSS set.

FIG. 8E is a diagram illustrating a table used for the PDCCH monitoring occasion configuration for the Type0-PDCCH CSS set.

FIG. 9A is a diagram for describing an example of multiplexing of an SS/PBCH block and a CORESET.

FIG. 9B is a diagram for describing an example of the multiplexing of an SS/PBCH block and a CORESET.

FIG. 9C is a diagram for describing an example of the multiplexing of an SS/PBCH block and a CORESET.

FIG. 10 is a diagram illustrating an example of an IE of an MIB in LTE.

FIG. 11 is a diagram for describing an arrangement example of a CORESET #0 according to an embodiment of the present disclosure.

FIG. 12 is a block diagram illustrating an example of a configuration of a base station device according to the embodiment of the present disclosure.

FIG. 13 is a diagram illustrating an example of a configuration of a terminal device according to the embodiment of the present disclosure.

FIG. 14 is a diagram for describing a secondary PBCH indication method according to the embodiment of the present disclosure.

FIG. 15 is a diagram illustrating a correspondence relationship between reserved bits included in a PBCH and resources of a secondary PBCH according to the embodiment of the present disclosure.

FIG. 16 is a diagram illustrating a correspondence relationship between a reserved bit included in the PBCH and resources of the secondary PBCH according to the embodiment of the present disclosure.

FIG. 17 is a diagram for describing a method of indicating a second CORESET #0 according to the embodiment of the present disclosure.

FIG. 18 is a diagram illustrating a correspondence relationship between reserved bits included in a PBCH and resources of the second CORESET #0 according to the embodiment of the present disclosure.

FIG. 19 is a diagram illustrating a correspondence relationship between a reserved bit included in the PBCH and resources of the second CORESET #0 according to the embodiment of the present disclosure.

FIG. 20A is a diagram illustrating an example of a second table according to the embodiment of the present disclosure.

FIG. 20B is a diagram illustrating an example of the second table according to the embodiment of the present disclosure.

FIG. 20C is a diagram illustrating an example of the second table according to the embodiment of the present disclosure.

FIG. 20D is a diagram illustrating an example of the second table according to the embodiment of the present disclosure.

FIG. 20E is a diagram illustrating an example of the second table according to the embodiment of the present disclosure.

FIG. 20F is a diagram illustrating an example of the second table according to the embodiment of the present disclosure.

FIG. 21 is a diagram for describing a method of indicating the CORESET #0 according to the embodiment of the present disclosure.

FIG. 22 is a diagram illustrating an example of parameters related to a synchronization raster.

FIG. 23 is a diagram illustrating an example of parameters related to the synchronization raster according to the embodiment of the present disclosure.

FIG. 24 is a diagram illustrating another example of the parameters related to the synchronization raster according to the embodiment of the present disclosure.

FIG. 25 is a diagram illustrating a configuration example of the secondary PBCH according to the embodiment of the present disclosure.

FIG. 26 is a diagram for describing an example of a method for multiplexing of the secondary PBCH and the SS/PBCH block according to the embodiment of the present disclosure.

FIG. 27 is a diagram for describing another example of the method for multiplexing of the secondary PBCH and the SS/PBCH block according to the embodiment of the present disclosure.

FIG. 28 is a diagram for describing another example of the method for multiplexing of the secondary PBCH and the SS/PBCH block according to the embodiment of the present disclosure.

FIG. 29 is a diagram for describing another example of the method for multiplexing of the secondary PBCH and the SS/PBCH block according to the embodiment of the present disclosure.

FIG. 30 is a diagram for describing another example of the method for multiplexing of the secondary PBCH and the SS/PBCH block according to the embodiment of the present disclosure. Description of Embodiments

Hereinafter, exemplary embodiments of the present disclosure will be described in detail with reference to the appended drawings. Note that, in the present specification and the drawings, components having substantially the same functional configuration are denoted by the same reference signs, so that an overlapping description of these components is omitted.

In the present specification and the drawings, components having substantially the same functional configuration may be distinguished by adding different alphabets after the same reference signs. For example, a plurality of components having substantially the same functional configuration are distinguished as necessary, such as base station devices 20A and 20B. However, in a case where it is not particularly necessary to distinguish each of the plurality of components having substantially the same functional configuration, only the same reference sign is given. For example, in a case where it is not necessary to particularly distinguish between the base station devices 20A and 20B, they are simply referred to as a base station device 20.

Each of one or more embodiments (including examples and modified examples) described below can be implemented independently. On the other hand, at least some of the plurality of embodiments described below may be implemented in combination with at least some of other embodiments as appropriate. These plurality of embodiments may include novel characteristics different from each other. Therefore, these plurality of embodiments can contribute to achieve or solving different purposes or problems, and can exert different effects.

Note that the description will be made in the following order.

1. Introduction
1.1. Example of Configuration of System
1.2. Related Technologies
1.3. Technical Problem
2. Configuration Example of Each Device
2.1. Configuration Example of Base Station Device
2.2. Configuration Example of Terminal Device
3. Technical Features
3.1. SS/PBCH Block
3.2. RMSI (SIB1)
3.3. RACH Procedure

3.4. Initial DL BWP
3.5. Configuration Example of Secondary PBCH
4. Modified Example
5. Conclusion

<<1. Introduction>>

<1.1. Example of Configuration of System>

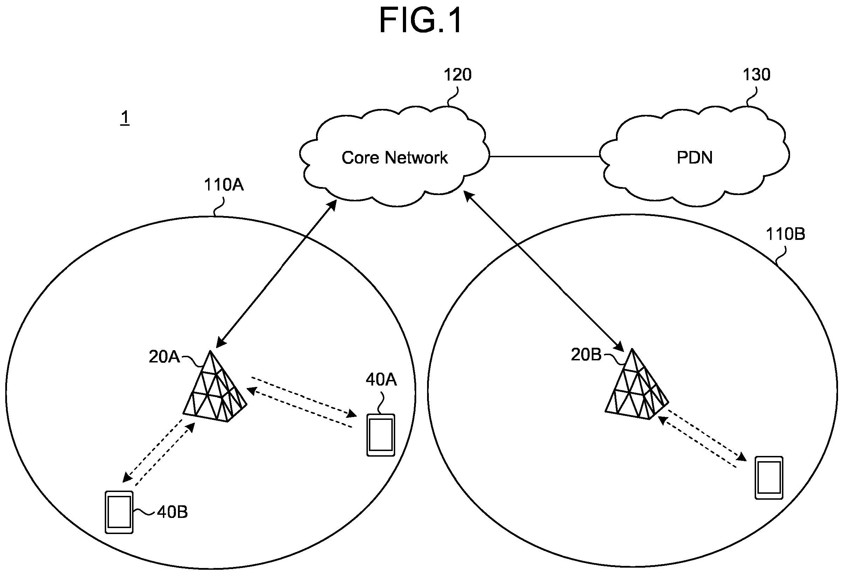

FIG. 1 is a diagram illustrating an example of an overall configuration of a communication system 1 according to an embodiment of the present disclosure. As illustrated in FIG. 1, the communication system 1 includes a plurality of base station devices 20 (20A and 20B), a plurality of terminal devices 40 (40A and 40B), a core network 120, and a packet data network (PDN) 130. Note that the number of respective devices is not limited thereto, and for example, the number of base station devices 20 or the number of terminal devices 40 may be one.

The base station device 20 is a communication device that operates a cell 110 and provides a wireless communication service to one or more terminal devices 40 located inside the coverage of the cell 110. The cell 110 can be operated according to any wireless communication scheme such as LTE or New Radio (NR). The base station device 20 is connected to the core network 120. The core network 120 is connected to the packet data network (PDN) 130 via a gateway device (not illustrated). Note that the base station device 20 may be implemented by a set of a plurality of physical or logical devices. For example, in an embodiment of the present disclosure, the base station device 20 is classified into a plurality of devices including a baseband unit (BBU) and a radio unit (RU), and may be interpreted as a set of these plurality of devices. In addition or instead, in an embodiment of the present disclosure, the base station device 20 may be either or both of the BBU and the RU. The BBU and the RU may be connected by a predetermined interface (for example, eCPRI). In addition or instead, the RU may be referred to as a remote radio unit (RRU) or a Radio DoT (RD). In addition or instead, the RU may correspond to a gNB distributed unit (gNB-DU) described below. In addition or instead, the BBU may correspond to a gNB central unit (gNB-CU) described below. In addition or instead, the RU may be a device integrally formed with an antenna. An antenna of the base station device 20 (for example, the antenna integrally formed with the RU) may adopt an advanced antenna system and support MIMO (for example, FD-MIMO) or beamforming. In the advanced antenna system, the antenna of the base station device 20 (for example, the antenna integrally formed with the RU) may include, for example, 64 transmitting antenna ports and 64 receiving antenna ports.

Further, a plurality of base station devices 20 may be connected to each other. One or more base station devices 20 may be included in a radio access network (RAN). That is, the base station device 20 may be simply referred to as a RAN, a RAN node, an access network (AN), or an node. The RAN in the LTE is referred to as an enhanced universal terrestrial RAN (EUTRAN). The RAN in the NR is referred to as an NGRAN. The RAN in W-CDMA (UMTS) is referred to as a UTRAN. The base station device 20 in the LTE is referred to as an evolved node B (eNodeB) or an eNB. That is, the EUTRAN includes one or more eNodeBs (eNBs). Further, the base station device 20 in the NR is referred to as a gNodeB or a gNB. That is, the NGRAN includes one or more gNBs. Further, the EUTRAN may include a gNB (en-gNB) connected to the core network (EPC) in the communication system (EPS) of the LTE. Similarly, the NGRAN may include an ng-eNB connected to the core network (5G Core (5GC)) in a 5G communication system (5GS). In addition or instead, in a case where the base station device 20 is an eNB, a gNB, or the like, the base station may be referred to as 3GPP access. In addition or instead, in a case where the base station device 20 is a radio access point, the base station may be referred to as non-3GPP access. In addition or instead, the base station device 20 may be an optical feeder device which is called a remote radio head (RRH). In addition or instead, in a case where the base station device 20 is a gNB, the base station device 20 may be referred to as a combination of a gNB CU and a gNB DU described above or any of them. The gNB CU hosts a plurality of higher layers (for example, radio resource control (RRC), service data adaptation protocol (SDAP), and PDCP) of the access stratum for communication with the UE. On the other hand, the gNB-DU hosts a plurality of lower layers (for example, RLC, MAC, and PHY) of the access stratum. That is, among messages and information to be described later, RRC signalling (for example, various system information blocks (SIB) including a master information block (MIB) and an SIB1, an RRCSetup message, and an RRCReconfiguration message) may be generated by the gNB CU, while a downlink control indicator (DCI) and various physical channels (for example, a PDCCH and a PBCH) to be described later may be generated by the gNB-DU. Alternatively, in the RRC signalling, for example, some configurations such as IE: cellGroupConfig may be generated by the gNB-DU, and the remaining configurations may be generated by the gNB-CU. These configurations may be transmitted and received by an F1 interface to be described later. The base station device 20 may be configured to be able to perform communication with another base station device 20. For example, in a case where a plurality of base station devices 20 are eNBs or a combination of eNBs and en-gNBs, the base station devices 20 may be connected by an X2 interface. In addition or instead, in a case where a plurality of base station devices 20 are eNBs or a combination of gn-eNBs and gNBs, the devices may be connected by an Xn interface. In addition or instead, in a case where a plurality of base station devices 20 are a combination of gNB CUs and gNB DUs, the devices may be connected by the above-described F1 interface. The messages/information (RRC signalling, DCI information, or physical channel) to be described later may be communicated between a plurality of base station devices 20 (for example, via the X2, Xn, or F1 interface).

Further, as described above, the base station device 20 may be configured to manage a plurality of cells. A cell provided by the base station device 20 is called a serving cell. The serving cell includes a primary cell (PCell) and a secondary cell (SCell). In a case where Dual Connectivity (for example, EUTRA-EUTRA Dual Connectivity, EUTRA-NR Dual Connectivity (ENDC), EUTRA-NR Dual Connectivity with 5GC, NR-EUTRA Dual Connectivity (NEDC), or NR-NR Dual Connectivity) is provided to the UE (for example, terminal device 40), the PCell and zero or one or more SCells provided by a master node (MN) are referred to as a master cell group. Further, the serving cell may include a PSCell (a primary secondary cell or a primary SCG Cell). That is, in a case where the Dual Connectivity is provided to the UE, the PSCell and zero or one or more SCells provided by a secondary node (SN) are referred to as a secondary cell group (SCG). Unless specially configured (for example, physical uplink control channel (PUCCH) on SCell), the PUCCH is transmitted by the PCell and the PSCell, not by the SCell. Radio link failure is detected in the PCell and the PSCell, and is not detected (does not have to be detected) in the SCell. Since the PCell and the PSCell have a special role in the serving cell(s) as described above, they are also called special cells (SpCells). One downlink component carrier and one uplink component carrier may be associated with one cell. Further, a system bandwidth corresponding to one cell may be divided into a plurality of bandwidth parts. In this case, one or more bandwidth parts (BWPs) may be set in the UE and one bandwidth part may be used in the UE as an active BWP. Further, radio resources (for example, a frequency band, numerology (subcarrier spacing), and slot configuration) that can be used by the terminal device 40 may be different for each cell, each component carrier, or each BWP.

In a case where the core network 120 is an NR core network (5G Core (5GC)), the core network 120 can include an access and mobility management function (AMF), a session management function (SMF), a user plane function (UPF), a policy control function (PCF), and a unified data management (UDM).

In a case where the core network 120 is an LTE core network (evolved packet core (EPC)), the core network 120 can include a mobility management entity (MME), a serving gateway (S-GW), a PDN gateway (P-GW), a policy and charging rule function (PCRF), and a home subscriber server (HSS). The AMF and the MME are control nodes that handle a control plane signal, and manages the mobility of the terminal device 40. The UPF and the S-GW/P-GW are nodes that handle a user plane signal. The PCF/PCRF is a control node that performs a control related to a policy such as Quality of Service (QoS) for a PDU session or a bearer and charging. The UDM/HSS is a control node that handles subscriber data and performs a service control.

The terminal device 40 is a communication device that performs wireless communication with the base station device 20 under the control of the base station device 20. For example, the terminal device 40 measures a downlink signal from the base station device 20 and reports measurement information indicating a measurement result to the base station device 20. The base station device 20 controls wireless communication with the terminal device 40 based on the reported measurement information. On the other hand, the terminal device 40 can transmit an uplink signal for measurement to the base station device 20. In this case, the base station device 20 measures the uplink signal from the terminal device 40 and controls the wireless communication with the terminal device 40 based on the measurement information.

As described above, the base station devices 20 can transmit and receive information to and from each other by using an inter-base station interface. In a case where the core network is the 5GC, the inter-base station interface may be an Xn interface. In a case where the core network is the EPC, the inter-base station interface may be an X2 interface. For example, the base station device 20 transmits measurement information related to the terminal device 40 that is predicted to be handed over (for example, a measurement result for a cell managed by a source base station device or a measurement result for a neighboring cell) to another adjacent base station device 20. As a result, a stable handover is implemented, and stability of the wireless communication of the terminal device 40 is secured.

Note that, although not illustrated in FIG. 1, there can be a communication device that provides a wireless communication service operated by another radio access technology (RAT) such as Wi-Fi (registered trademark) or MulteFire other than cellular communication around the communication system 1. Such a communication device is typically connected to the PDN 130.

Here, the terminal device 40 according to the embodiment of the present disclosure includes a first terminal device 40A and a second terminal device 40B. The first terminal device 40A may be a high-end terminal device corresponding to a use case such as enhanced mobile broadband (eMBB) or ultra-reliable and low latency communications (URLLC). The first terminal device 40A may be referred to as a conventional NR device (for example, normal NR UE or legacy NR UE) in order to be distinguished from the second terminal device 40B.

In addition, the second terminal device 40B is a terminal device that has lower performance, device cost, and complexity and lower power consumption than the first terminal device 40A, in other words, lower capability than the first terminal device 40A. The second terminal device 40B may be referred to as a low-capability NR device (for example, NR-Light UE) to be distinguished from the first terminal device 40A.

[First Terminal Device]

The first terminal device 40A is a terminal device whose maximum supported reception bandwidth is larger than a predetermined value. The predetermined value is, for example, a minimum supported reception bandwidth (5 MHz in FR1 and 50 MHz in FR2).

Specifically, the supported reception bandwidth of the first terminal device 40A is determined according to a supported operating band and a subcarrier spacing in a range of 5 MHz or more and 100 MHz or less in FR1 and in a range of 50 MHz or more and 400 MHz or less in FR2. For example, the first terminal device 40A supporting an NR band n1 supports reception bands of 5, 10, 15, and 20 MHz, and the first terminal device 40A supporting an NR band n41 supports reception bands of 10, 15, 20, 40, 50, 60, 80, 90, and 100 MHz. In addition, the first terminal device 40A supporting NR bands n257, n258, n260, and n261 supports reception bands of 50, 100, 200, and 400 MHz.

In a case of FR1, the first terminal device 40A supports at least two receiving antennas in a band of 2.5 GHz or less. In addition, the first terminal device 40A supports at least four receiving antennas in a band above 2.5 GHz in a case of FR1. Further, the first terminal device 40A supports 4-layer MIMO in a band above 2.5 GHz.

The first terminal device 40A supports full-duplex (full-duplex communication) in frequency-division duplexing (FDD).

A user equipment (UE) processing time is determined based on a UE processing capability. In the first terminal device 40A, two types of processing capabilities, that is, a UE processing capability 1 and a UE processing capability 2 are defined. The UE processing capability 1 defines a default processing capability of the terminal device 40 (NR device). In addition, the UE processing capability 2 defines a higher processing capability than the UE processing capability 1.

[Second Terminal Device]

The second terminal device 40B has, for example, a narrower supported bandwidth than the first terminal device 40A. The second terminal device 40B supports a reception band having a bandwidth narrower than 100 MHz in a case of FR1. The second terminal device 40B supports a reception band having a bandwidth narrower than 200 MHz in a case of FR2. That is, the second terminal device 40B is a terminal device whose maximum supported reception bandwidth is a predetermined value or less. The predetermined value is, for example, a minimum supported reception bandwidth (5 MHz in FR1 and 50 MHz in FR2) of the first terminal device 40A.

For example, in FR1, the upper limit for the second terminal device 40B that supports a subcarrier spacing (SCS) (numerology) of 15 kHz is a bandwidth of 5 MHz or 10 MHz. For example, in FR1, the upper limit for the second terminal device 40B that supports a subcarrier spacing of 30 kHz is a bandwidth of 10 MHz or 20 MHz. For example, in FR2, the upper limit for the second terminal device 40B that supports a subcarrier spacing of 60 kHz or 120 kHz is a bandwidth of 50 MHz.

Furthermore, the second terminal device 40B has, for example, a smaller number of supported antennas than the first terminal device 40A. For example, the second terminal device 40B supports one receiving antenna in FR1.

The second terminal device 40B supports, for example, half-duplex (half-duplex communication) in FDD.

The second terminal device 40B has, for example, a longer UE processing time or a lower UE processing capability than the first terminal device 40A. That is, in the second terminal device 40B, a processing capability lower than the UE processing capability 1 described above can be applied. Alternatively, in the second terminal device 40B, a processing time longer than that for the UE processing capability 1 described above can be allowed.

As a use case of such a low-capability second terminal device 40B, for example, the second terminal device 40B is assumed to be applied to an industrial wireless sensor that reports environmental information such as temperature, humidity, and atmospheric pressure. Alternatively, it is assumed that the second terminal device 40B is applied to a surveillance camera and used for video surveillance in a smart city or a factory. Furthermore, the second terminal device 40B is assumed to be applied to a wearable device such as a smart watch, a smart ring, or a medical/healthcare device. The second terminal device 40B can also be applied to a smart home device.

<1.2. Related Technologies>

Next, a technology related to an initial access (cell connection) procedure in a communication system (hereinafter, also referred to as a conventional communication system) that includes only the first terminal device 40A and does not include the second terminal device 40B will be described.

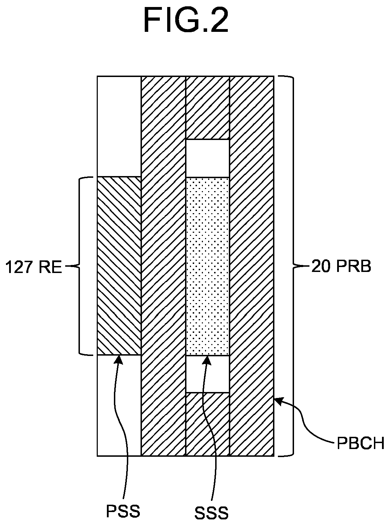

FIG. 2 is a diagram illustrating an example of a synchronization signal/physical broadcast channel (SS/PBCH) block. The SS/PBCH block (SSB block) includes a primary synchronization signal (PSS), a secondary synchronization signal (SSS), a physical broadcast channel (PBCH), and a demodulation reference signal (DMRS) of a PBCH. The PSS and the SSS have 127 sequences and are arranged in 127 REs. The PSS is arranged at the first symbol of the SS/PBCH block, and the SSS is arranged at the third symbol of the SS/PBCH block. The PBCH is arranged at the second to fourth symbols. The PBCH is arranged in 20 physical resource blocks (PRBs) for the second and fourth symbols, and arranged in four upper PRBs and four lower PRBs in the SS/PBCH block for the third symbol.

The MIBs in the SS/PBCH blocks having the same center frequency are the same as each other. On the other hand, the MIBs of the SS/PBCH blocks having different center frequencies may be different from each other.

Further, a plurality of SS/PBCH blocks are placed on the same center frequency. A different SS/PBCH block index is assigned to each SS/PBCH block. The first terminal device 40A may assume that SS/PBCH blocks having the same block index placed on the same center frequency are quasi-co-located (QCL). On the other hand, the terminal device 40 does not have to assume that SS/PBCH blocks placed on different center frequencies or SS/PBCH blocks having different block indexes placed on the same center frequency are quasi-co-located (QCL).

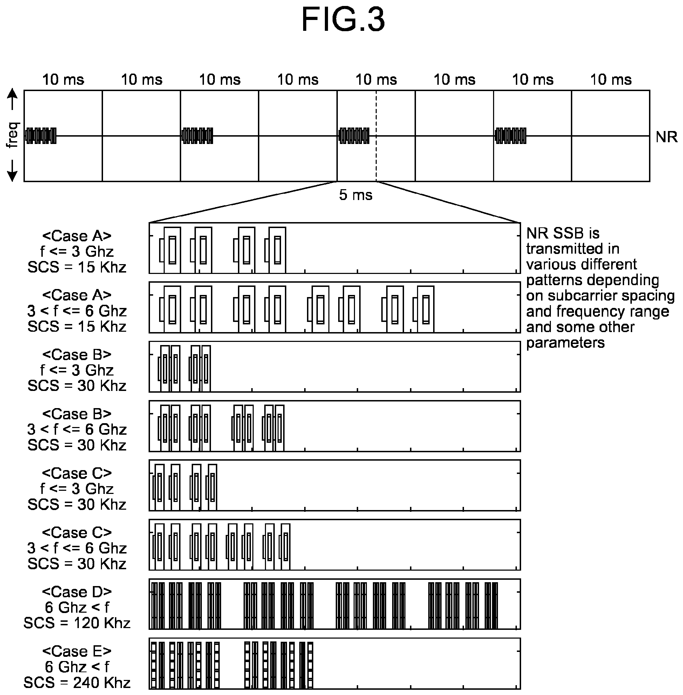

FIG. 3 is a diagram illustrating an arrangement example of SS/PBCH blocks. The SS/PBCH is arranged as illustrated in FIG. 3 as an example. One or more SS/PBCH blocks are arranged in a half frame (5 msec). The plurality of SS/PBCH blocks in the half frame are also referred to as an SS/PBCH block burst or an SSB burst.

The maximum number of SS/PBCH blocks arranged in one half frame is defined as Lmax, and is four in a case of FR1 and 3 GHz or less, eight in a case of FR1 and 3 GHz or more, 10 in a case of an unlicensed band and 15 kHz SCS, 20 in the case of unlicensed band and 30 kHz SCS, and 64 in a case of FR2. In other words, the number of the plurality of SSBs in one SSB burst can depend on a subcarrier spacing associated with a frequency band.

The first symbol of one or more SS/PBCH blocks is arranged in the following symbols.

· Case A: {2,8} + 14 × n
· Case B: {4,8,16,20} + 28 × n
· Case C: {2,8} + 14 × n
· Case D: {4,8,16,20} + 28 × n
· Case E: {2,8} + 14 × n

Here, n is an arbitrary positive number.

The cycle of the SS/PBCH block burst may be set to any of 5, 10, 20, 40, 80, and 160 msec. On the other hand, in initial cell selection, the terminal device 40 assumes that the cycle of the SS/PBCH block burst is 20 msec.

In the future, a frequency band higher than 52600 MHz (for example, a band of 100 GHz) and a frequency range (for example, FR3) may be newly defined by expansion. In this case, 64 may not be enough for the maximum number of SSBs (Lmax) in one SSB burst to cover the same geographical area because it is necessary to further narrow the beam. For example, in the band of 100 GHz, Lmax = 64 is not sufficient, and Lmax may be larger than 64, for example 128 or 256. Some embodiments, including the present embodiment, are also applicable to a frequency range (for example, FR3) and Lmax of 64 or more that may be defined in the future.

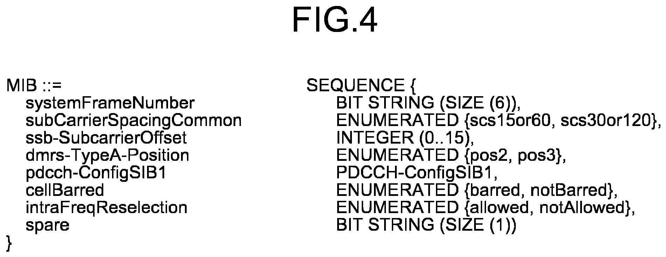

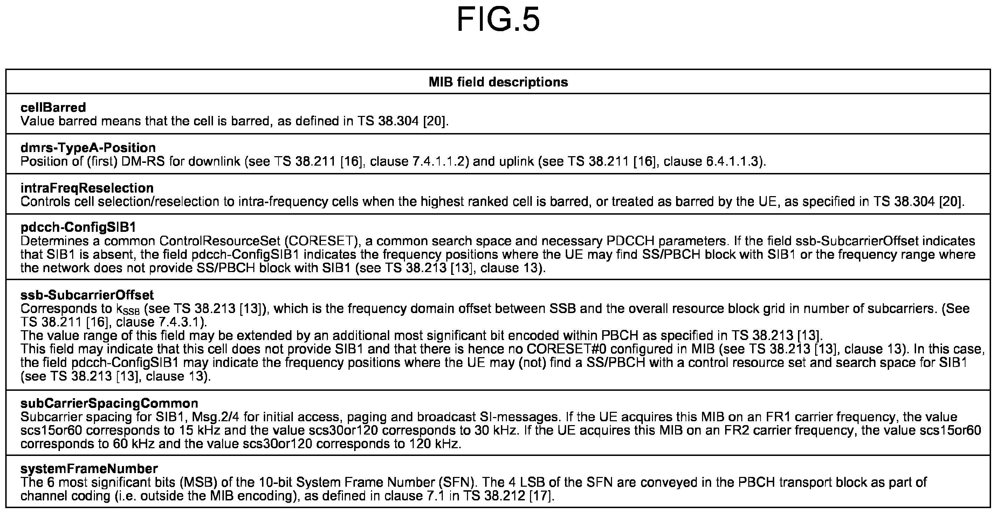

FIGS. 4 and 5 are diagrams illustrating an example of an information element (IE) of the MIB. The MIB in the NR includes 23 bits. The MIB includes IEs illustrated in FIGS. 4 and 5.

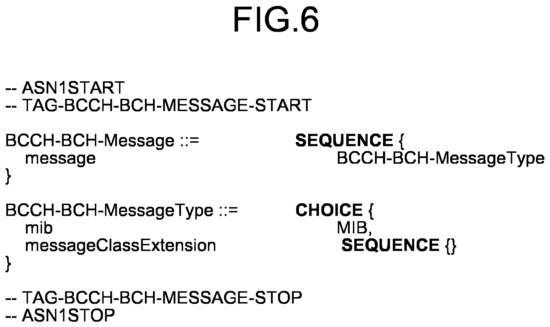

FIG. 6 is a diagram illustrating a configuration example of messages of a broadcast control channel (BCCH) and a broadcast channel (BCH). The BCCH is mapped to the BCH. As illustrated in FIG. 6, the BCH includes an MIB or messageClassExtension. In a case of the MIB, BCH data includes 24 bits (23 bits of the MIB + selected 1 bit).

A PBCH payload includes the first to fourth least signification bits (LSBs) of a system frame number (SFN) and half-frame bits in addition to the BCH data.

Further, in a case where Lmax is 64 (that is, in a case of FR2), the PBCH payload includes the fourth to sixth synchronization signal/PBCH block (SSB) indexes, and the rest (that is, in a case of FR1) includes the most significant bit (MSB) of $K_{SSB}$ and two reserved bits.

In the NR, remaining minimum system information (RMSI) (SIB1) is transmitted on a physical downlink shared channel (PDSCH) and a PDCCH that schedules the PDSCH. The PDCCH is arranged in a search space of a Type0-PDCCH CSS set. In addition, a CRC scrambled by an SI-RNTI is added to the PDCCH.

In initial cell access (including cell search, cell selection/reselection, random access procedure, RRC connection establishment procedure, and the like), the terminal device 40 (UE) performs configuration of a control resource set (CORESET) #0 (a CORESET for a Type0-PDCCH search space set) and configuration of the Type0-PDCCH CSS set by the MIB. Specifically, the terminal device 40 (UE) receives an SSB and receives an MIB mapped to a PBCH included in the SSB. The CORESET #0 configuration and PDCCH monitoring occasion configuration for the Type0-PDCCH CSS set are made by 8-bit PDCCH-ConfigSIB1 included in the MIB.

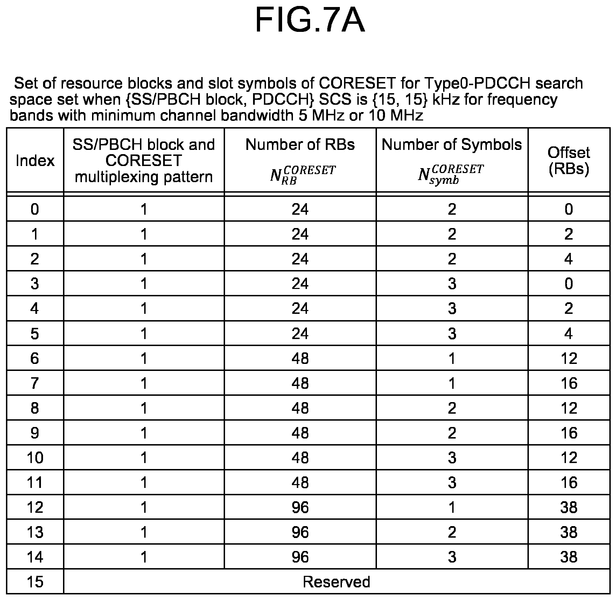

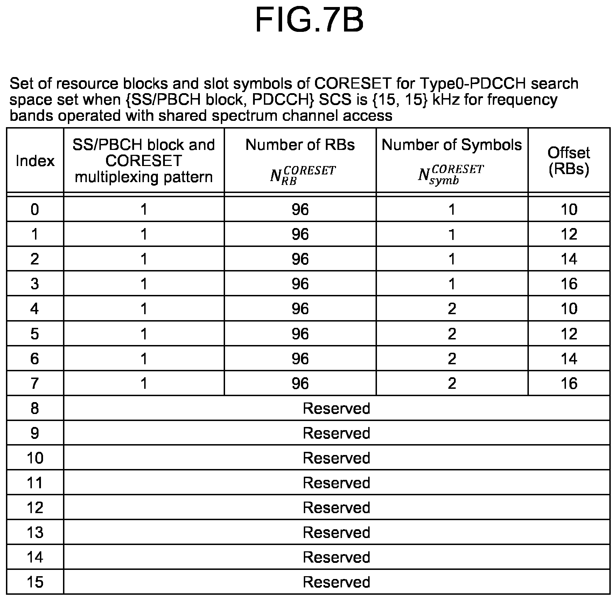

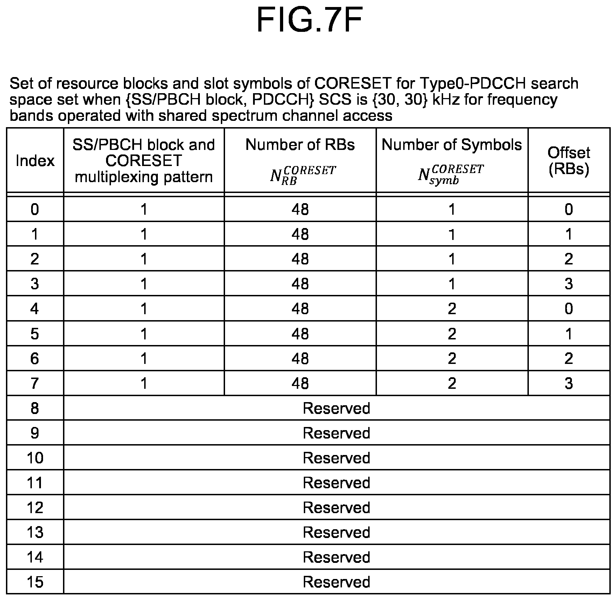

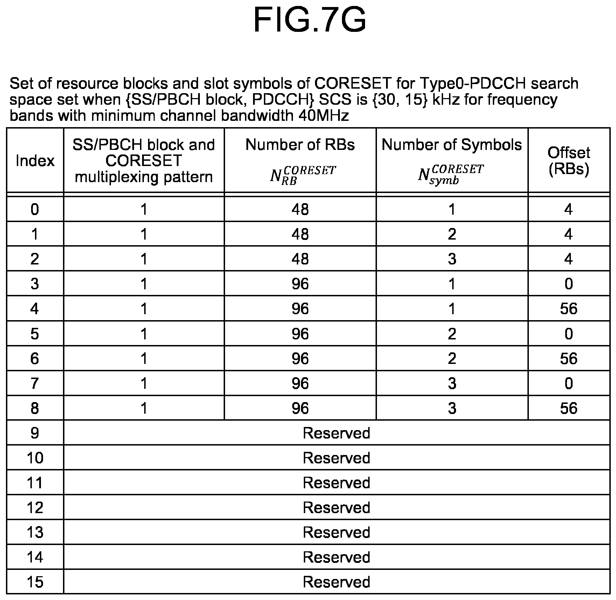

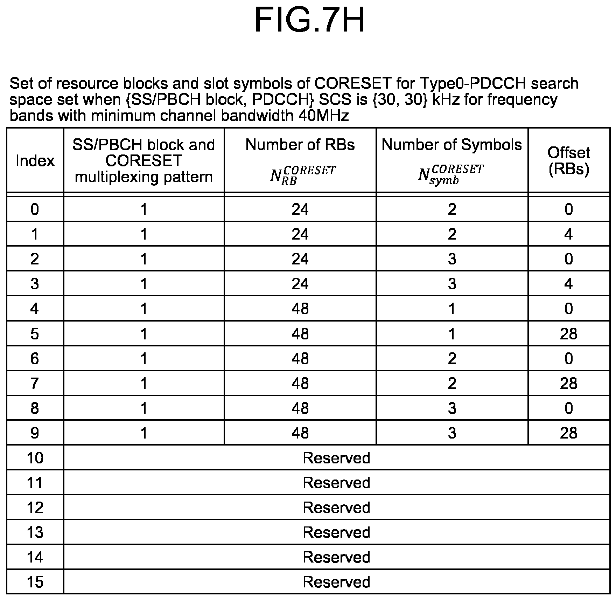

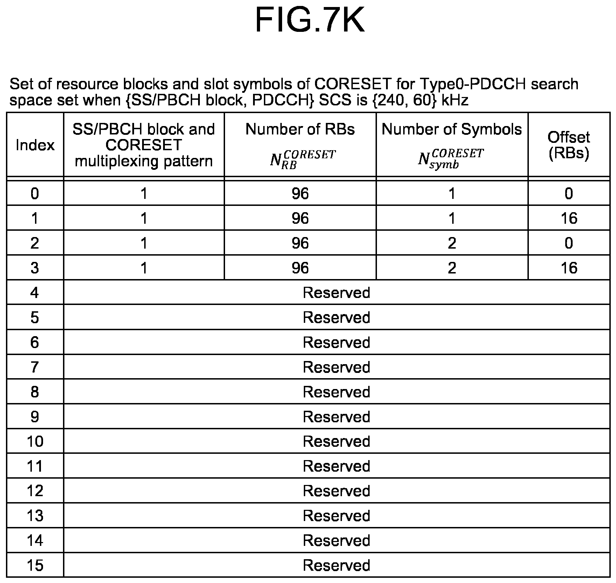

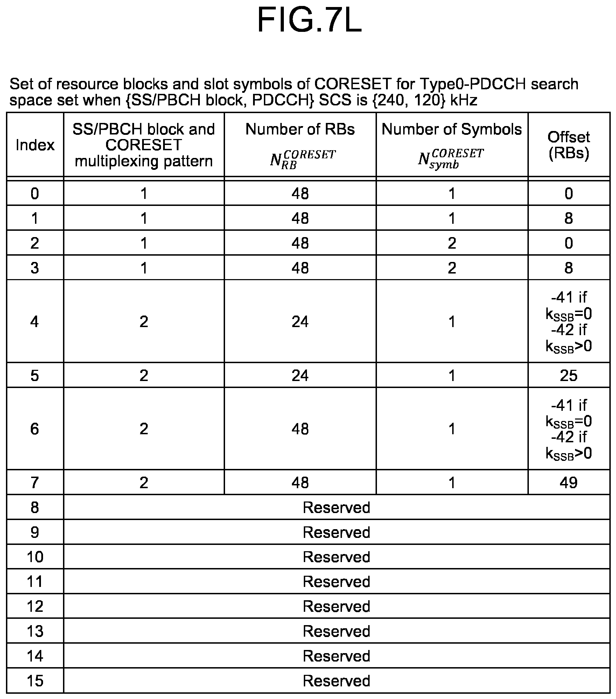

FIGS. 7A to 7L are diagrams illustrating tables used for the CORESET #0 configuration. Notification of the CORESET #0 configuration notified by the MIB is made according to an index and the tables illustrated in FIGS. 7A to 7L. An SS/PBCH block and CORESET multiplexing pattern, the number of resource blocks (RBs), the number of symbols, and a resource block offset from an SS/PBCH block of the CORESET #0 are specified by the index.

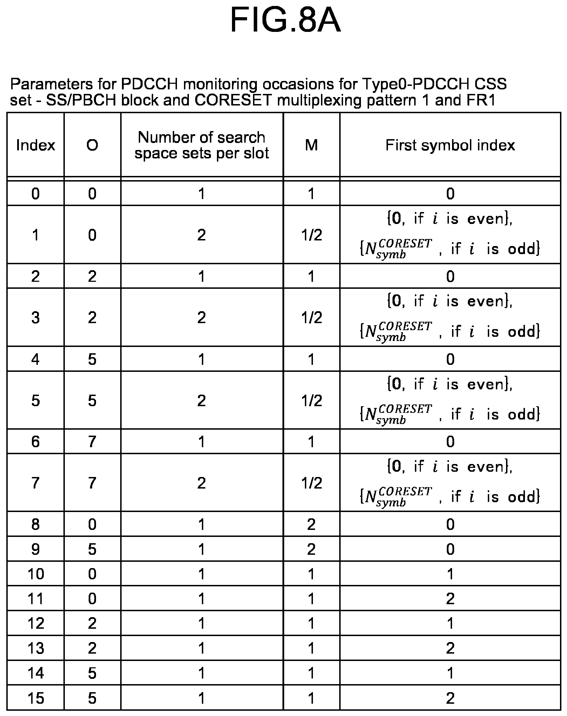

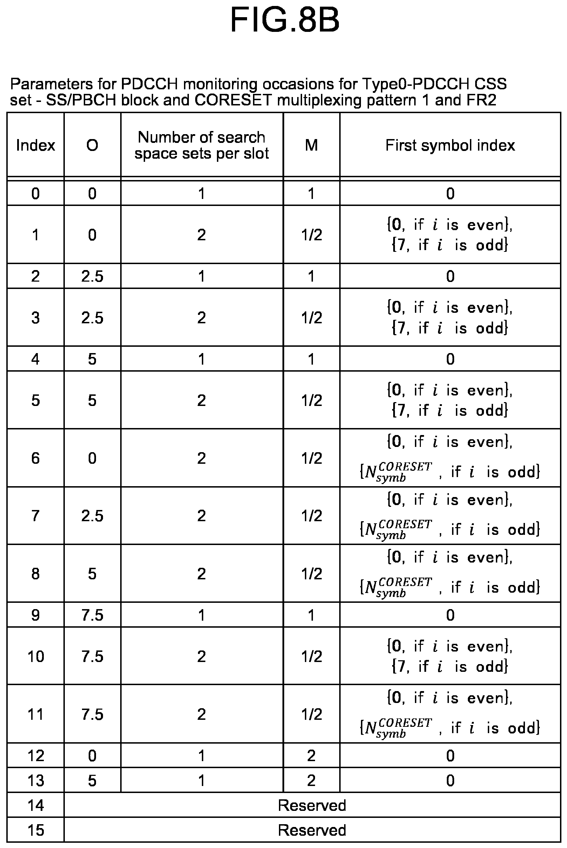

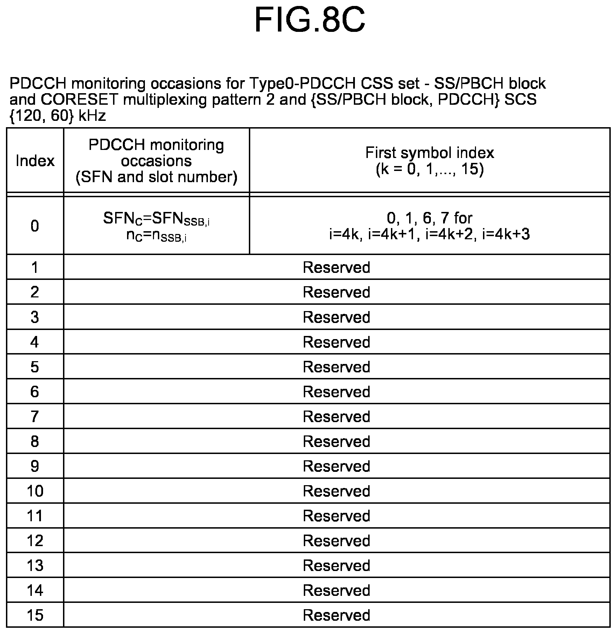

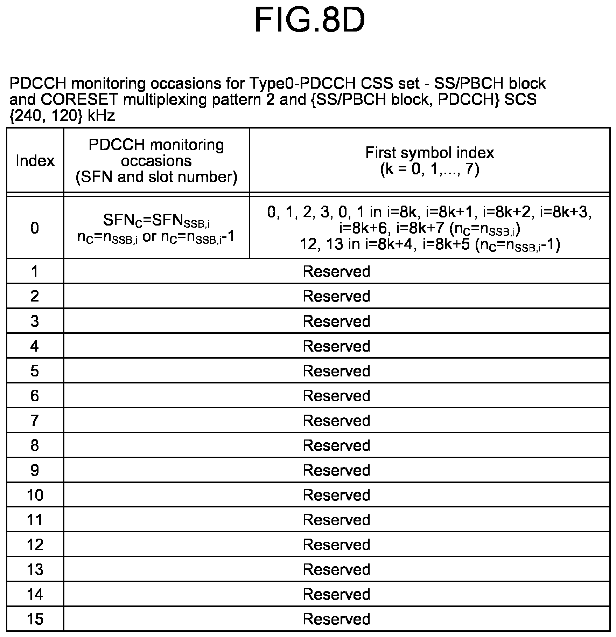

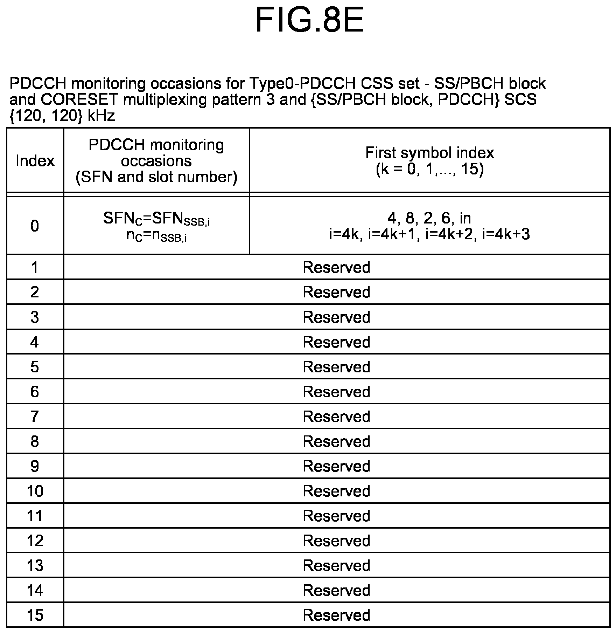

FIGS. 8A to 8E are diagrams illustrating tables used for the PDCCH monitoring occasion configuration for the Type0-PDCCH CSS set. Notification of the PDCCH monitoring occasion configuration for the Type0-PDCCH CSS set notified by the MIB is made according to an index and the tables illustrated in FIGS. 8A to 8L. A value O specifying a start slot of a PDCCH monitoring occasion, the number of search space sets in a slot, a value M indicating a relationship between an SS/PBCH block and the PDCCH monitoring occasion, and a first symbol index of the Type0-PDCCH CSS set are specified by the index.

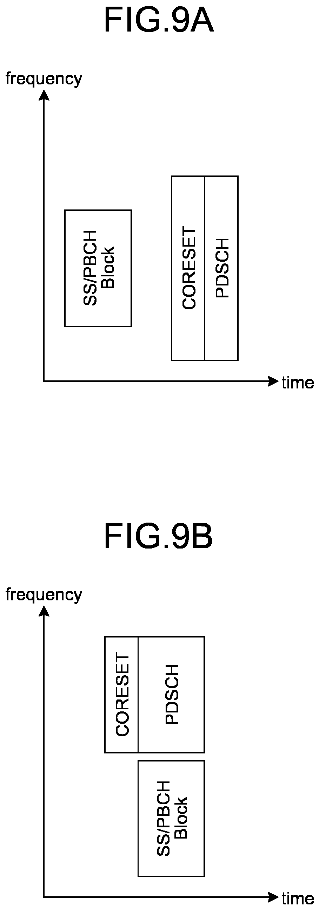

Here, an example of multiplexing of an SS/PBCH block and a CORESET (SS/PBCH block and CORESET multiplexing pattern) will be described. FIGS. 9A to 9C are diagrams for describing an example of multiplexing of an SS/PBCH block and a CORESET. As illustrated in FIGS. 9A to 9C, three SS/PBCH block and CORESET multiplexing patterns are defined.

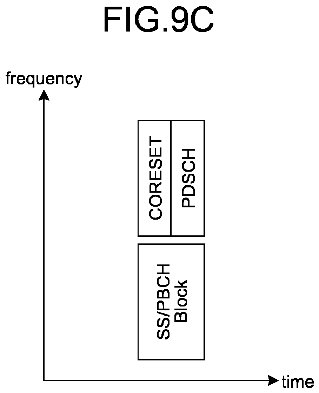

In Pattern 1 illustrated in FIG. 9A, the SS/PBCH block and the PDSCH carrying the CORESET #0 and the SIB1 are multiplexed by time division multiplexing (TDM). In Pattern 2 illustrated in FIG. 9B, the SS/PBCH block and the CORESET #0 are multiplexed by TDM, and the SS/PBCH and the PDSCH carrying the SIB1 are multiplexed by frequency division multiplexing (FDM). In Pattern 3 illustrated in FIG. 9C, the SS/PBCH block and CORESET #0 are multiplexed by FDM, and the SS/PBCH block and the PDSCH carrying the SIB1 are multiplexed by FDM.

Note that, after cell connection (for example, after transition to RRC_Connected in a PCell), the CORESET #0 configuration and/or the setting of the Type0-PDCCH CSS set can be overwritten by dedicated RRC signalling (that is, RRCSetup message or RRCReconfiguration message).

Here, also in the LTE, a terminal device capable of wide bandwidth reception and a terminal device capable of narrow bandwidth reception (referred to as a machine-type communication (MTC) terminal) can coexist in one cell (for example, serving cell).

Such an MTC terminal may not be able to receive a PDCCH region that can be received by the terminal device capable of wide bandwidth reception. Therefore, in the LTE, notification of a receivable PDCCH region (M-PDCCH region) for the MTC terminal is made using a spare bit prepared in a PBCH.

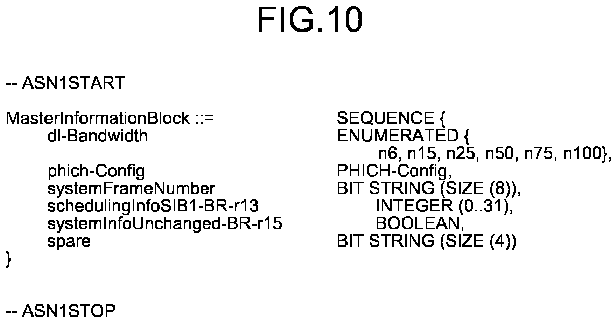

FIG. 10 is a diagram illustrating an example of an IE of an MIB in the LTE. Specifically, the terminal device capable of wide bandwidth reception obtains dl-Bandwidth, phich-Config, and systemFrameNumber. On the other hand, the MTC terminal acquires schedulingInfoSIB1-BR in addition to dl-Bandwidth, phich-Config, and systemFrameNumber, and recognizes the M-PDCCH region.

<1.3. Technical Problem>

As described above, the communication system in which the first terminal device 40A that is a conventional device and the low-capability second terminal device 40B coexist is desired. The coexistence mentioned here means that the second terminal device 40B can also be connected to a cell/carrier to which the first terminal device 40A is connected, and both services can be provided using multiplexing by orthogonal resources such as time, frequency, and space and/or non-orthogonal resources in the same cell/carrier.

At this time, it is difficult for the second terminal device 40B to perform the initial access procedure (including cell search, cell selection/reselection, random access procedure, RRC connection establishment procedure, and the like) to perform cell connection only by simply adding the low-capability second terminal device 40B to the conventional communication system.

For example, in a case where information related to initial access is provided with a bandwidth wider than the maximum supported reception bandwidth of the second terminal device 40B, it is difficult for the second terminal device 40B to receive the information.

For example, the CORESET #0 (the CORESET for the Type0-PDCCH search space set) is configured by the MIB in order to receive basic information (minimum system information (MSI)) necessary for cell connection. In the conventional communication system, the CORESET #0 can be configured with a maximum of 96 PRBs if the subcarrier spacing is 15 kHz. On the other hand, it is difficult for the second terminal device 40B to receive the CORESET #0 configured with the number of PRBs larger than the maximum supported bandwidth. Specifically, in a case where the maximum supported bandwidth is 5 MHz, it is difficult for the second terminal device 40B to receive the CORESET #0 configured with the number of PRBs larger than 24. Specifically, in a case where the maximum supported bandwidth is 1.6 MHz, it is difficult for the second terminal device 40B to receive the CORESET #0 configured with the number of PRBs larger than 6. Specifically, in a case where the maximum supported bandwidth is 200 kHz, it is difficult for the second terminal device 40B to receive the CORESET #0 configured with the number of PRBs larger than 1.

In addition, for example, in a case where the CORESET #0 is common to the first terminal device 40A and the second terminal device 40B, the bandwidth thereof is limited to 24 PRBs. Here, in a case where the first terminal device 40A needs a resource corresponding to 96 PRBs for receiving information necessary for cell connection, the resource in the time domain is increased due to the limitation of the resource in the frequency domain. As a result, the time for the first terminal device 40A to receive the information necessary for cell connection becomes long, and a latency problem occurs. Therefore, it is necessary that the bandwidth of the CORESET #0 can be configured independently in each of the first terminal device 40A and the second terminal device 40B.

Here, for example, similarly to the above-described LTE, a method of making notification of a PDCCH region receivable for the second terminal device 40B independent of the first terminal device 40A by using a spare bit prepared in a PBCH is considered. However, it is difficult to make notification of resource information of the PDCCH region of the second terminal device 40B only with one spare bit included in an MIB of the PBCH in the NR.

· Overview of Proposed Technology

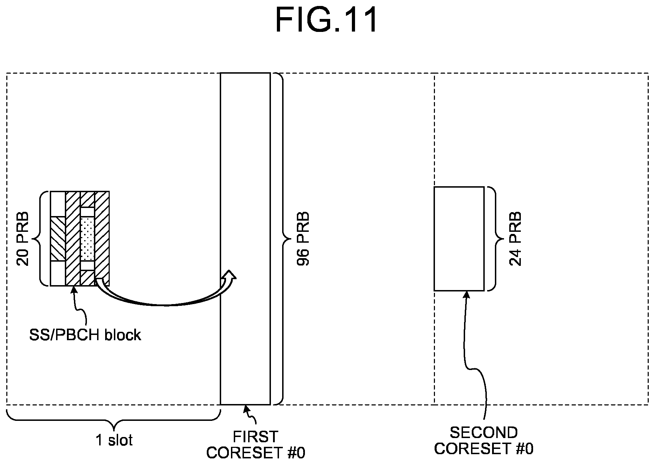

FIG. 11 is a diagram for describing an arrangement example of the CORESET #0 according to the embodiment of the present disclosure. In the technology of the present disclosure, as illustrated in FIG. 11, a first CORESET #0 (an example of first CORESET configuration) applied to the first terminal device 40A and a second CORESET #0 (an example of second CORESET configuration) applied to the second terminal device 40B are defined.

The first CORESET #0 is configured with a maximum of 96 PRBs that can be received by the first terminal device 40A. On the other hand, the second CORESET #0 is configured with a maximum of 24 PRBs that can be received by the second terminal device 40B.

In the technology of the present disclosure, the terminal device 40 determines whether to apply the first CORESET #0 or the second CORESET #0 based on one or more bits included in a signal received by monitoring a PBCH.

Alternatively, a primary PBCH for designating the first CORESET #0 and a secondary PBCH for designating the second CORESET #0 may be provided, and the first terminal device 40A may monitor the primary PBCH and the second terminal device 40B may monitor the secondary PBCH. That is, the first terminal device 40A that monitors the primary PBCH to receive a signal performs communication by applying the first CORESET #0, and the second terminal device 40B that monitors the secondary PBCH to receive a signal performs communication by applying the second CORESET #0.

<2. Configuration Example of Each Device>

<2.1. Configuration Example of Base Station Device>

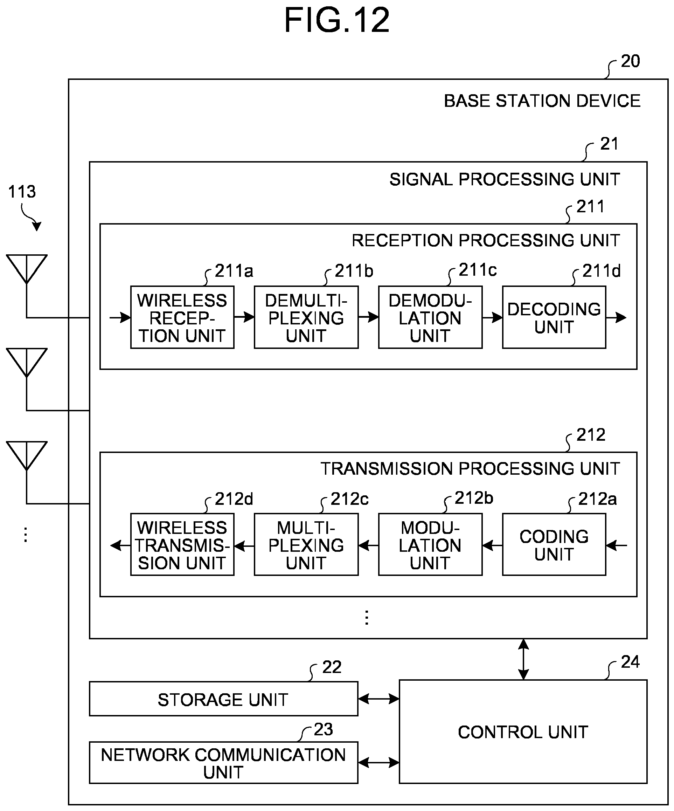

Next, the configuration of the base station device 20 will be described. FIG. 12 is a diagram illustrating an example of the configuration of the base station device 20 according to the embodiment of the present disclosure. The base station device 20 is a communication device (wireless system) that performs wireless communication with the terminal device 40. The base station device 20 is a type of information processing device.

The base station device 20 includes a wireless communication unit 21, a storage unit 22, a network communication unit 23, and a control unit 24. Note that the configuration illustrated in FIG. 12 is a functional configuration, and a hardware configuration may be different from this. Further, the functions of the base station device 20 may be distributed to and implemented in a plurality of physically separated devices.

The wireless communication unit 21 is a wireless communication interface that performs wireless communication with other communication devices (for example, the terminal device 40 and another base station device 20). The wireless communication unit 21 is operated under the control of the control unit 24. The wireless communication unit 21 may support a plurality of radio access schemes. For example, the wireless communication unit 21 may support both the NR and the LTE. The wireless communication unit 21 may support another cellular communication scheme such as W-CDMA or cdma2000. Further, the wireless communication unit 21 may support a wireless LAN communication scheme in addition to the cellular communication scheme. It is a matter of course that the wireless communication unit 21 may only support one radio access scheme.

The wireless communication unit 21 includes a reception processing unit 211, a transmission processing unit 212, and an antenna 413. The wireless communication unit 21 may include a plurality of reception processing units 211, a plurality of transmission processing units 212, and a plurality of antennas 413. Note that, in a case where the wireless communication unit 21 supports a plurality of radio access schemes, each unit of the wireless communication unit 21 can be individually configured for each radio access scheme. For example, in a case where the base station device 20 supports the NR and the LTE, the reception processing unit 211 and the transmission processing unit 212 may be individually configured for each of the NR and the LTE.

The reception processing unit 211 processes an uplink signal received via the antenna 413. The reception processing unit 211 includes a wireless reception unit 211a, a demultiplexing unit 211b, a demodulation unit 211c, and a decoding unit 211d.

The wireless reception unit 211a performs, on the uplink signal, down-conversion, removal of an unnecessary frequency component, a control of an amplification level, quadrature demodulation, conversion into a digital signal, removal of a guard interval, extraction of a frequency domain signal by fast Fourier transform, and the like. For example, it is assumed that the radio access scheme of the base station device 20 is a cellular communication scheme such as LTE. At this time, the demultiplexing unit 211b separates an uplink channel such as a physical uplink shared channel (PUSCH) or physical uplink control channel (PUCCH) and an uplink reference signal from a signal output from the wireless reception unit 211a. The demodulation unit 211c performs demodulation of a reception signal for a modulation symbol of the uplink channel by using a modulation scheme such as binary phase shift keying (BPSK) or quadrature phase shift keying (QPSK). The modulation scheme used by the demodulation unit 211c may be multi-level QAM such as 16-quadrature amplitude modulation (QAM), 64-QAM, or 256-QAM. The decoding unit 211d performs decoding processing on a coded bit of the demodulated uplink channel. Decoded uplink data and uplink control information are output to the control unit 24.

The transmission processing unit 212 performs transmission processing of downlink control information and downlink data. The transmission processing unit 212 includes a coding unit 212a, a modulation unit 212b, a multiplexing unit 212c, and a wireless transmission unit 212d.

The coding unit 212a codes the downlink control information and the downlink data input from the control unit 24 by using a coding method such as block coding, convolutional coding, or turbo coding. The modulation unit 212b modulates the coded bit output from the coding unit 212a by a predetermined modulation scheme such as BPSK, QPSK, 16-QAM, 64-QAM, or 256-QAM. The multiplexing unit 212c multiplexes a modulation symbol of each channel and a downlink reference signal, and maps them to a predetermined resource element. The wireless transmission unit 212d performs various kinds of signal processing on a signal from the multiplexing unit 212c. For example, the wireless transmission unit 212d performs processing such as conversion into the time domain by fast Fourier transform, addition of a guard interval, generation of a baseband digital signal, conversion into an analog signal, quadrature modulation, up-conversion, removal of extra frequency components, or power amplification. A signal generated by the transmission processing unit 212 is transmitted from the antenna 413.

The storage unit 22 is a storage device, from which data can be read and in which data can be written, such as a DRAM, an SRAM, a flash memory, or a hard disk. The storage unit 22 functions as storage means of the base station device 20.

The network communication unit 23 is a communication interface for communicating with other devices (for example, another base station device 20). For example, the network communication unit 23 is a local area network (LAN) interface such as a network interface card (NIC). The network communication unit 23 may be a universal serial bus (USB) interface including a USB host controller, a USB port, and the like. Further, the network communication unit 23 may be a wired interface or a wireless interface. The network communication unit 23 functions as network communication means of the base station device 20. The network communication unit 23 performs communication with another device under the control of the control unit 24.

The control unit 24 is a controller that controls each unit of the base station device 20. The control unit 24 is implemented by, for example, a processor such as a central processing unit (CPU) or a micro processing unit (MPU). For example, the control unit 24 is implemented in a manner in which the processor executes various programs stored in the storage device inside the base station device 20 by using a RAM or the like as a work area. Note that the control unit 24 may be implemented by an integrated circuit such as an application specific integrated circuit (ASIC) or a field programmable gate array (FPGA). The CPU, the MPU, the ASIC, and the FPGA can all be regarded as the controller.

<2.2. Configuration Example of Terminal Device>

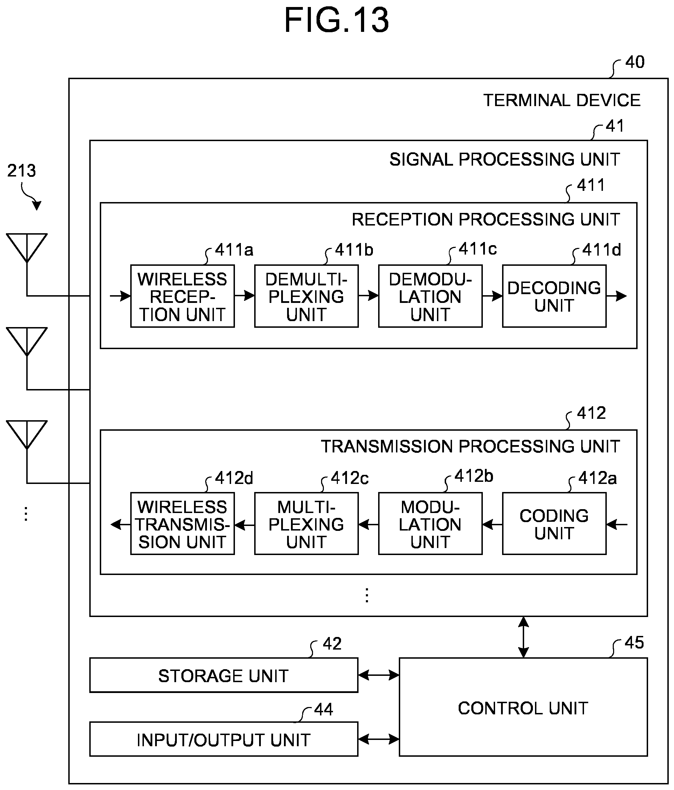

Next, the configuration of the terminal device 40 will be described. FIG. 13 is a diagram illustrating an example of the configuration of the terminal device 40 according to the embodiment of the present disclosure. The terminal device 40 is a communication device (wireless system) that performs wireless communication with the base station device 20. The terminal device 40 is a type of information processing device.

The terminal device 40 includes a wireless communication unit 41, a storage unit 42, an input/output unit 44, and a control unit 45. Note that the configuration illustrated in FIG. 13 is a functional configuration, and a hardware configuration may be different from this. Further, the functions of the terminal device 40 may be distributed to and implemented in a plurality of physically separated components.

The wireless communication unit 41 is a wireless communication interface that performs wireless communication with other communication devices (for example, the base station device 20 and another terminal device 40). The wireless communication unit 41 is operated under the control of the control unit 45. The wireless communication unit 41 supports one or more radio access schemes. For example, the wireless communication unit 41 supports both the NR and the LTE. The wireless communication unit 41 may support another radio access scheme such as W-CDMA or cdma2000.

The wireless communication unit 41 includes a reception processing unit 411, a transmission processing unit 412, and an antenna 313. The wireless communication unit 41 may include a plurality of reception processing units 411, a plurality of transmission processing units 412, and a plurality of antennas 313. Note that, in a case where the wireless communication unit 41 supports a plurality of radio access schemes, each unit of the wireless communication unit 41 can be individually configured for each radio access scheme. For example, the reception processing unit 411 and the transmission processing unit 412 may be individually configured for each of LTE and NR. The configurations of the reception processing unit 411 and the transmission processing unit 412 are similar to those of the reception processing unit 211 and the transmission processing unit 212 of the base station device 20.

The storage unit 42 is a storage device, from which data can be read and in which data can be written, such as a DRAM, an SRAM, a flash memory, or a hard disk. The storage unit 42 functions as storage means of the terminal device 40.

The input/output unit 44 is a user interface for exchanging information with the user. For example, the input/output unit 44 is an operation device for the user to perform various operations, such as a keyboard, a mouse, an operation key, or a touch panel. Alternatively, the input/output unit 44 is a display device such as a liquid crystal display or an organic electroluminescence (EL) display. The input/output unit 44 may be an audio device such as a speaker or a buzzer. Further, the input/output unit 44 may be a lighting device such as a light emitting diode (LED) lamp. The input/output unit 44 functions as input/output means (input means, output means, operation means, or notification means) of the terminal device 40.

The control unit 45 is a controller that controls each unit of the terminal device 40. The control unit 45 is implemented by, for example, a processor such as a CPU or an MPU. For example, the control unit 45 is implemented in a manner in which the processor executes various programs stored in the storage device inside the terminal device 40 by using a RAM or the like as a work area. Note that the control unit 45 may be implemented by an integrated circuit such as an ASIC or a FPGA. The CPU, the MPU, the ASIC, and the FPGA can all be regarded as the controller.

<<3. Technical Features>>

As described above, in order to allow the first terminal device 40A having the conventional capability and the second terminal device 40B having a low capability to coexist, it is necessary to define an initial access procedure that can be performed by both the first terminal device 40A and the second terminal device 40B.

<3.1. SS/PBCH Block>

Therefore, in the embodiment of the present disclosure, the first terminal device 40A applies the first CORESET configuration, and the second terminal device 40B applies the second CORESET configuration, so that terminal devices 40 having different capabilities can be connected to the same cell.

Here, the terminal device 40 obtains information for receiving the CORESET #0 by receiving an SS/PBCH block. Accordingly, the terminal device 40 receives the CORESET #0. In order for the first terminal device 40A to receive the first CORESET #0 and for the second terminal device 40B to receive the second CORESET #0 as in the present embodiment, a method (common SS/PBCH block), in which the first and second terminal devices 40A and 40B receive the first CORESET #0 and the second CORESET #0, respectively, by using one SS/PBCH block, is used. Alternatively, a method (individual SS/PBCH block), in which the first terminal device 40A receives a first SS/PBCH block for receiving the first CORESET #0 and the second terminal device 40B receives a second SS/PBCH block, is also conceivable.

<Common SS/PBCH Block>

First, a case where a common SS/PBCH block is used for the first and second terminal devices 40A and 40B will be described.

(Secondary PBCH)

In this case, a method of transmitting a secondary PBCH to transmit an additional MIB to the second terminal device 40B is conceivable. The secondary PBCH includes information for receiving at least RMSI (SIB1) for the second terminal device 40B.

Here, examples of the information for receiving the RMSI for the second terminal device 40B include the second CORESET configuration (the CORESET #0 configuration for the second terminal device 40B and the CORESET for the Type0-PDCCH CSS set for the second terminal device 40B), second Type0-PDCCH CSS set configuration, and the like.

In addition, a physical configuration and information of the secondary PBCH will be described later.

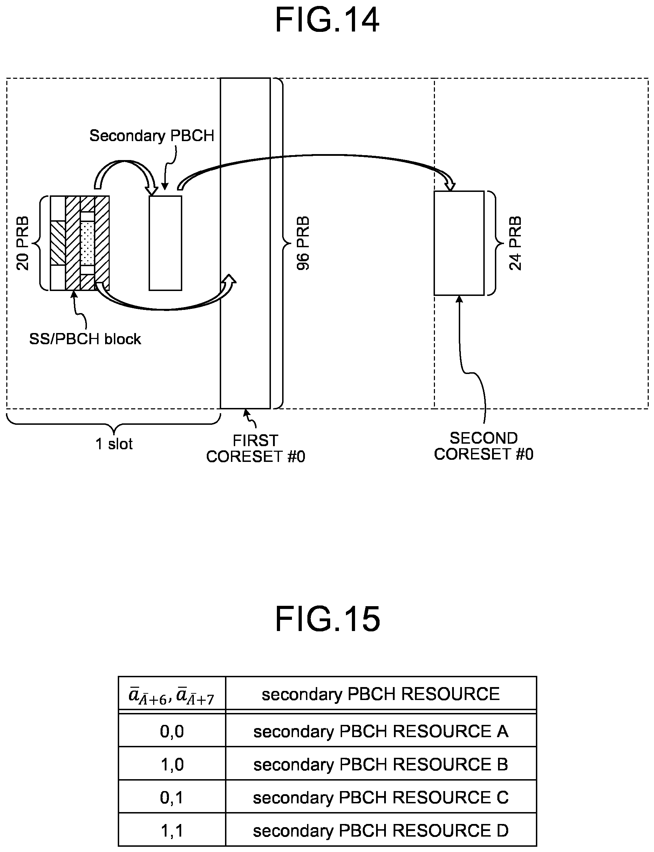

Here, a secondary PBCH indication method will be described. FIG. 14 is a diagram for describing the secondary PBCH indication method according to the embodiment of the present disclosure.

As illustrated in FIG. 14, the first CORESET #0 is indicated by an SS/PBCH block, and the first terminal device 40A receives the SS/PBCH block to obtain information for receiving the first CORESET #0.

Further, the secondary PBCH is indicated by one or more bits included in an SS/PBCH block, and the second terminal device 40B receives the one or more bits included in the SS/PBCH block to obtain information for receiving the secondary PBCH. Further, the second CORESET #0 is indicated by the secondary PBCH, and the second terminal device 40B receives the secondary PBCH to obtain information for receiving the second CORESET #0.

More specifically, the presence of the secondary PBCH is indicated by, for example, a spare bit (reserved bit or extended bit) included in a PBCH payload or an MIB. For example, the presence of the secondary PBCH is indicated by one spare bit included in an MIB. In a case of transmitting the secondary PBCH corresponding to the SSB, the base station device 20 uses the spare bit to indicate the presence of the secondary PBCH. The terminal device 40 determines whether or not the secondary PBCH is transmitted according to the spare bit. The second terminal device 40B attempts to receive the secondary PBCH when indicated by the spare bit.

In addition or alternatively, in a case where the maximum number of SSBs is 4, 8, or 10, the presence of the secondary PBCH or the resource thereof is indicated by a reserved bit included in the PBCH.

Specifically, in a case where the maximum number (Lmax) of SSBs is 4 or 8, four resources of the secondary PBCH are indicated by reserved bits of the PBCH based on the table illustrated in FIG. 15. FIG. 15 is a table illustrating a correspondence relationship between the reserved bits included in the PBCH and the resources of the secondary PBCH according to the embodiment of the present disclosure.

As illustrated in FIG. 15, four resources, secondary PBCH resources A to D are indicated by two reserved bits.

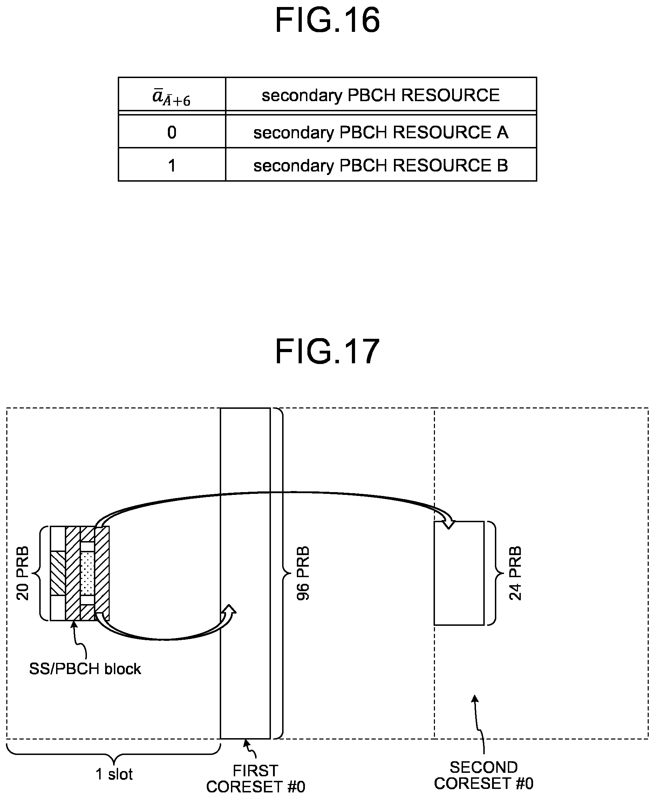

Furthermore, in a case where the maximum number (Lmax) of SSBs is 10, two resources of the secondary PBCH are indicated by a reserved bit of the PBCH based on the table illustrated in FIG. 16. FIG. 16 is a table illustrating a correspondence relationship between the reserved bit included in the PBCH and the resources of the secondary PBCH according to the embodiment of the present disclosure.

As illustrated in FIG. 16, two resources, secondary PBCH resources A and B are indicated by one reserved bit.

A candidate for the resource of the secondary PBCH may be indicated by a combination of the cycle of the secondary PBCH, a time offset (frame offset, half-frame offset, slot offset, or the like) from the resource of the SSB or resources of the first CORESET #0 and the Type0-PDCCH CSS set, and/or a frequency offset (PRB offset or subcarrier offset).

The candidate for the resource of the secondary PBCH may be overwritten by RRC signalling (for example, arbitrary system information (SIB-X), RRCSetup message, or RRCReconfiguration message). That is, secondary PBCH resources A to D are configured by the RRC signalling, and the second terminal device 40B refers to the positions of configured secondary PBCH resources A to D after receiving the RRC signalling. On the other hand, the default position of the candidate for the resource of the secondary PBCH is set, and the second terminal device 40B refers to the default positions of secondary PBCH resources A to D before being set by the RRC signalling.

Here, the base station device 20 transmits the secondary PBCH, but the present disclosure is not limited thereto. For example, in a case where the first CORESET #0 is configured to fall within the supported bandwidth of the second terminal device 40B by the CORESET #0 configuration included in the primary PBCH, the secondary PBCH does not have to be transmitted. In this case, the absence of the secondary PBCH is indicated. Alternatively, the presence of the secondary PBCH is not indicated. Therefore, the second terminal device 40B monitors the PDCCH of the CORESET #0 and acquires the RMSI (SIB1) similarly to the first terminal device 40A. Note that, in this case, the same CORESET #0 is applied to the first terminal device 40A and the second terminal device 40B, but as will be described later, it is possible to provide RMSI (second SIB1) specific to the second terminal device 40B by making a search space, an RNTI, and/or a DCI different.

Note that the base station device 20 notifies the first terminal device 40A of the actual transmission position of the secondary PBCH. This notification may be used for rate matching of the PDSCH of the first terminal device 40A. Specifically, this allows the first terminal device 40A to recognize the resource of the secondary PBCH. At the time of PDSCH reception, the first terminal device 40A can attempt decoding while avoiding the resource of the secondary PBCH, thereby improving a PDSCH reception characteristic. Note that this notification may be made as information on the non-actual transmission position of the secondary PBCH.

As a method for the notification, for example, there is a method of using ratematchPattern. For example, the base station device 20 sets a resource element in which the secondary PBCH is arranged as a rate match pattern for the first terminal device 40A after RRC connection. The first terminal device 40A can recognize that a resource designated by ratematchPattern is not a physical channel addressed to the first terminal device 40A. Alternatively, there is a method of performing the notification by using a UL symbol or a flexible symbol in a case where a cell to which the first terminal device 40A is connected is a TDD cell. In this case, the secondary PBCH is arranged in a resource indicated as the UL symbol by TDD-DL-UL-config notified to the first terminal device 40A by the SIB. Furthermore, as a method for the notification, for example, there is a method of using SSBBurstPosition (or SSBPositionsInBurst). In this case, for example, the secondary PBCH is arranged in a resource element on which the SSB is not actually transmitted. In a case of using SSBBurstPosition as a method for the notification, SSBBurstPosition (or SSBPositionsInBurst) for an SS/PBCH block (SSB) including the primary PBCH and SSBBurstPosition (or SSBPositionsInBurst) indicating the arrangement of the secondary PBCH may be distinguished from each other and included in the RRC signalling used for the notification as (different IEs).

(PBCH)

In addition to the method of indicating the second CORESET #0 from the PBCH via the secondary PBCH, there is also a method of directly indicating the second CORESET #0 from the PBCH, for example. In this case, the base station device 20 directly indicates the presence of the second CORESET #0 and the resource thereof from the PBCH.

Here, the method of indicating the second CORESET #0 will be described. FIG. 17 is a diagram for describing the method of indicating the second CORESET #0 according to the embodiment of the present disclosure.

As illustrated in FIG. 17, the first CORESET #0 is indicated by an SS/PBCH block, and the first terminal device 40A receives the SS/PBCH block to obtain information for receiving the first CORESET #0.

Further, the second CORESET #0 is indicated by one or more bits included in an SS/PBCH block, and the second terminal device 40B receives the one or more bits included in the SS/PBCH block to obtain information for receiving the second CORESET #0.

More specifically, the presence of the second CORESET #0 and the resource are indicated by using a spare bit of an MIB and reserved bits of a PBCH.

The presence of the second CORESET #0 is indicated by a spare bit (reserved bit or extended bit) included in a PBCH payload or an MIB, similarly to the case of the secondary PBCH. For example, the presence of the second CORESET #0 is indicated by one spare bit included in an MIB. In a case of transmitting the second CORESET #0 corresponding to the SSB, the base station device 20 uses the spare bit to indicate the presence of the second CORESET #0. The terminal device 40 determines whether or not the second CORESET #0 is transmitted according to the spare bit. The second terminal device 40B attempts to receive the second CORESET #0 when indicated by the spare bit.

In addition, in a case where the maximum number of SSBs is 4, 8, or 10, the resource of the second CORESET #0 is indicated by a reserved bit included in the PBCH.

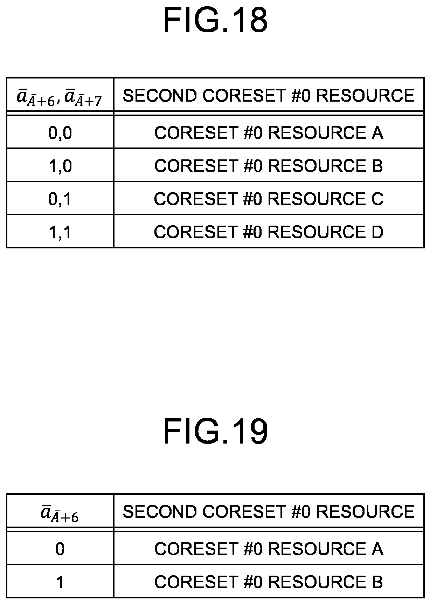

Specifically, in a case where the maximum number (Lmax) of SSBs is 4 or 8, four resources of the second CORESET #0 are indicated by reserved bits of the PBCH based on the table illustrated in FIG. 18. FIG. 18 is a diagram illustrating a correspondence relationship between reserved bits included in the PBCH and the resources of the second CORESET #0 according to the embodiment of the present disclosure.

As illustrated in FIG. 18, four resources, second CORESET #0 resources A to D are indicated by two reserved bits.

In addition, in a case where the maximum number (Lmax) of SSBs is 10, two resources of the second CORESET #0 are indicated by a reserved bit of the PBCH based on the table illustrated in FIG. 19. FIG. 19 is a diagram illustrating a correspondence relationship between the reserved bit included in the PBCH and the resources of the second CORESET #0 according to the embodiment of the present disclosure.

As illustrated in FIG. 19, two resources, second CORESET #0 resources A and B are indicated by one reserved bit.

A candidate for the resource of the second CORESET #0 may be indicated by a combination of a time offset (frame offset, half-frame offset, slot offset, or the like) from the resource of the SS/PBCH block or resources of the first CORESET #0 and a first Type0-PDCCH CSS set, and/or a frequency offset (PRB offset or subcarrier offset). As a specific example, the resource of the second CORESET #0 is arranged in the next slot of the resource of the first CORESET #0.

(Selective Reading of MIB Information)

In addition, there is a method of selectively reading MIB information for transmitting information on the CORESET #0 (the CORESET for the Type0-PDCCH search space set) and the Type0-PDCCH CSS set (the PDCCH monitoring occasions for the Type0-PDCCH CSS set) in the first and second terminal devices 40A and 40B.

· Device Type

First, a method in which the terminal device 40 selectively reads a table to be referred to according to the device type of the terminal device 40 will be described. The device type is information indicating whether the own device is a device having a conventional capability or a device having a capability lower than the conventional capability.

The first terminal device 40A having the conventional capability refers to a table of the conventional CORESET for the Type0-PDCCH search space set and the conventional PDCCH monitoring occasions for the Type0-PDCCH CSS set (hereinafter, also referred to as a first table) (see FIGS. 7A to 7L).

On the other hand, the second terminal device 40B having the capability lower than the conventional capability refers to a table of the CORESET for the Type0-PDCCH search space set and/or the PDCCH monitoring occasions for the Type0-PDCCH CSS set different from the conventional table (hereinafter, also referred to as a second table). Details of the table will be described later.

In this manner, the terminal device 40 can receive the CORESET #0 according to its device type by selectively reading the table to be referred to according to the device type.

· Indication by PBCH

Alternatively, the table to be referred to by the terminal device 40 may be selectively read according to indication by the PBCH. In this case, the terminal device 40 selectively reads the table to be referred to according to a spare bit included in an MIB, for example.

Specifically, in a case where the spare bit included in the MIB indicates to refer to the second table, the terminal device 40 (specifically, the first terminal device 40A and the second terminal device 40B after Rel-17) refers to the second table; otherwise, the terminal device 40 (specifically, the first terminal device 40A and the second terminal device 40B after Rel-17) refers to the first table. On the other hand, the first terminal device 40A before Rel-16 refers to the first table regardless of the indication by the spare bit.

In this way, by indicating the table to be referred to by the PBCH, the terminal device 40 can receive an appropriate CORESET #0.

· Configuration Example of Reference Table

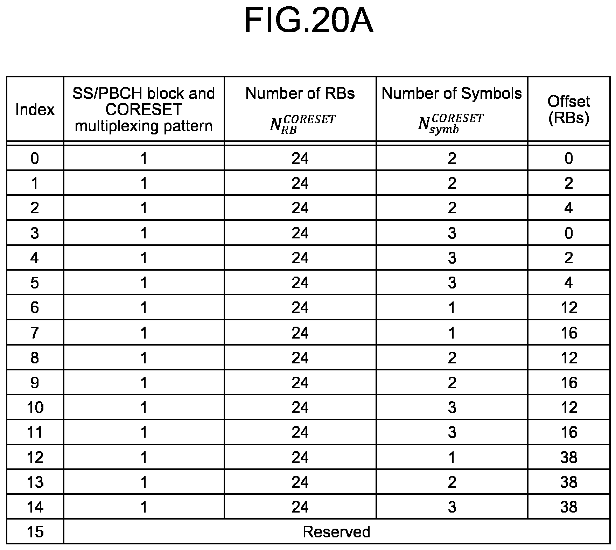

Here, a configuration example of the second table will be described with reference to FIGS. 20A to 20F. FIGS. 20A to 20F are diagrams illustrating examples of the second table according to the embodiment of the present disclosure.

In the table of the CORESET for the Type0-PDCCH search space set (second table) different from the conventional CORESET for the Type0-PDCCH search space set, for all indexes, the number of PRBs is defined as being equal to or less than the bandwidth supported by the second terminal device 40B.

Specifically, in a case where the SCSs of the SS/PBCH block and the PDCCH are 15 kHz and 15 kHz, respectively, the second terminal device 40B refers to a table in which the number of RBs of the CORESET is set to 24 or less. As an example, the second terminal device 40B refers to the table illustrated in FIG. 20A. Note that the table illustrated in FIG. 20A is the same as the table illustrated in FIG. 7A except that the number of RBs of Indexes 6 to 14 is 24.

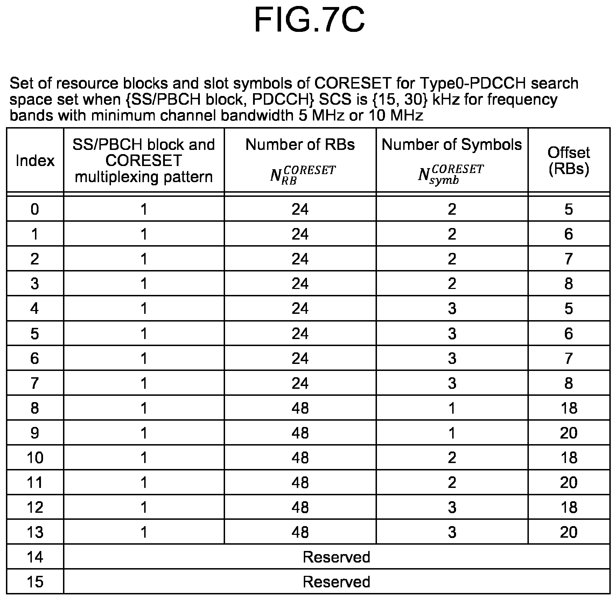

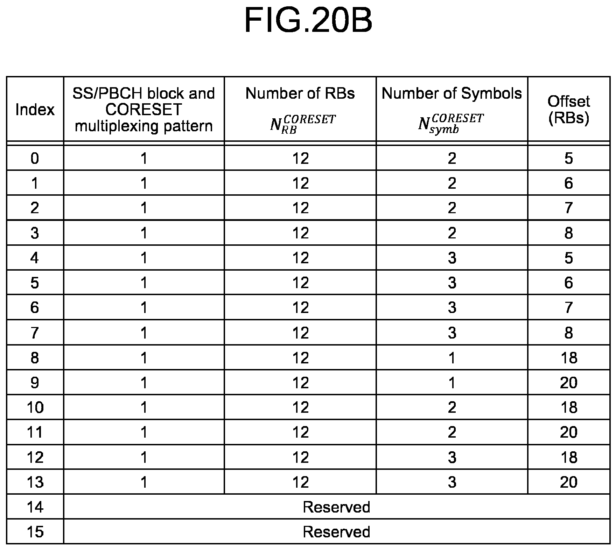

In a case where the SCSs of the SS/PBCH block and the PDCCH are 15 kHz and 30 kHz, respectively, the second terminal device 40B refers to a table in which the number of RBs of the CORESET is set to 12 or less. As an example, the second terminal device 40B refers to the table illustrated in FIG. 20B. Note that the table illustrated in FIG. 20B is the same as the table illustrated in FIG. 7C except that the number of RBs of Indexes 1 to 13 is 12.

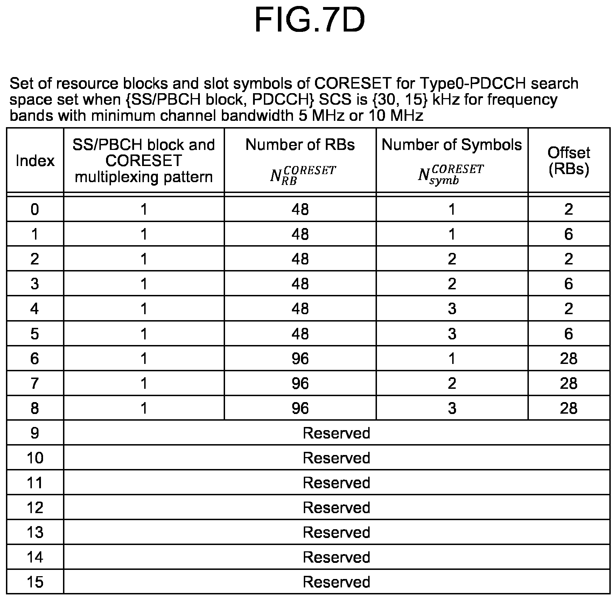

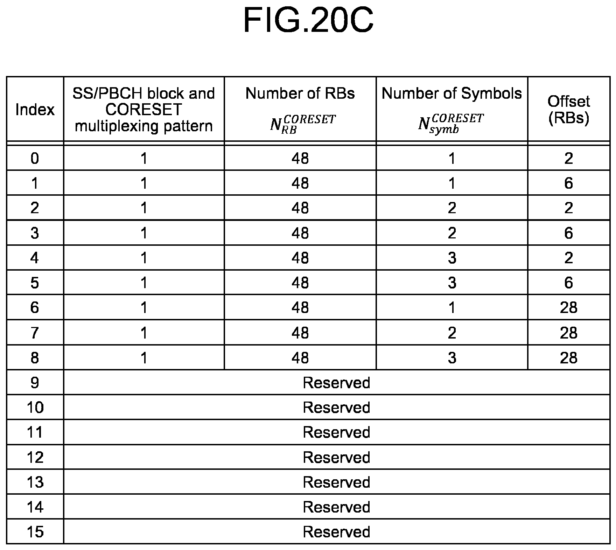

In a case where the SCSs of the SS/PBCH block and the PDCCH are 30 kHz and 15 kHz, respectively, the second terminal device 40B refers to a table in which the number of RBs of the CORESET is set to 48 or less. As an example, the second terminal device 40B refers to the table illustrated in FIG. 20C. Note that the table illustrated in FIG. 20C is the same as the table illustrated in FIG. 7D except that the number of RBs of Indexes 6 to 8 is 48.

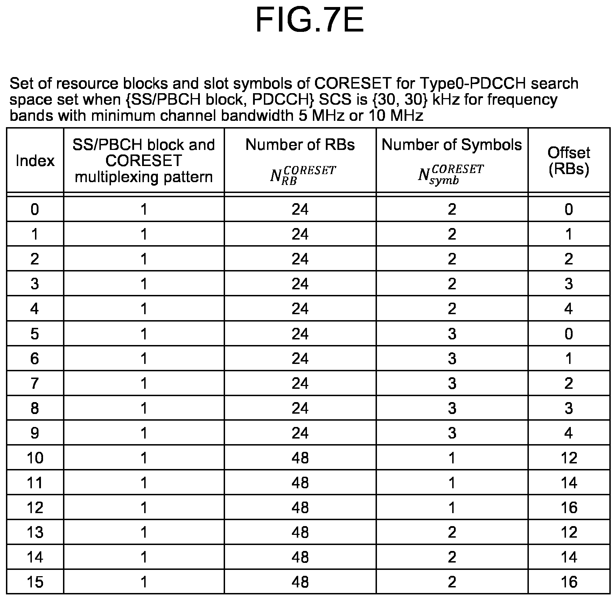

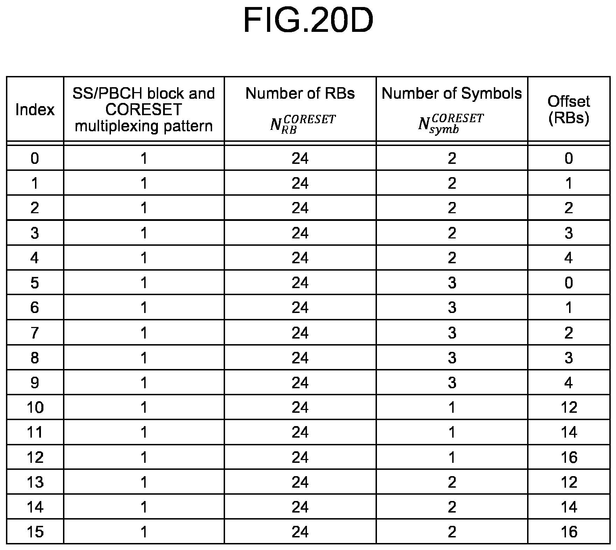

In a case where the SCSs of the SS/PBCH block and the PDCCH are 30 kHz and 30 kHz, respectively, the second terminal device 40B refers to a table in which the number of RBs of the CORESET is set to 24 or less. As an example, the second terminal device 40B refers to the table illustrated in FIG. 20D. Note that the table illustrated in FIG. 20D is the same as the table illustrated in FIG. 7E except that the number of RBs of Indexes 10 to 15 is 24.

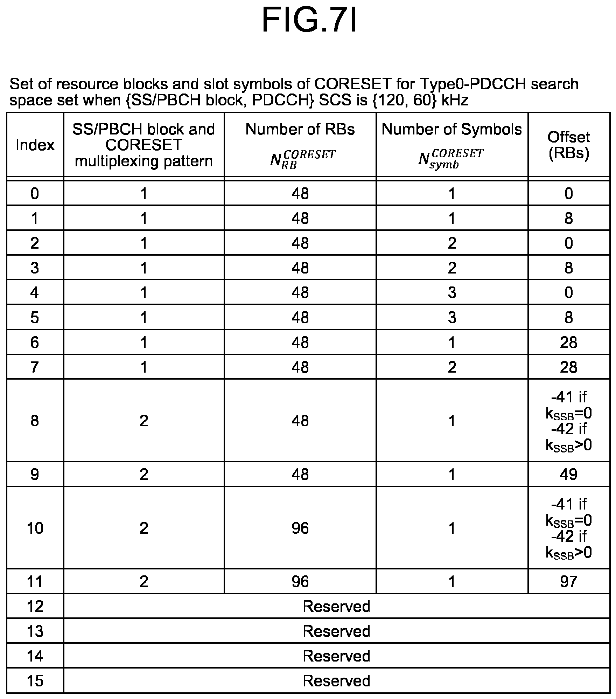

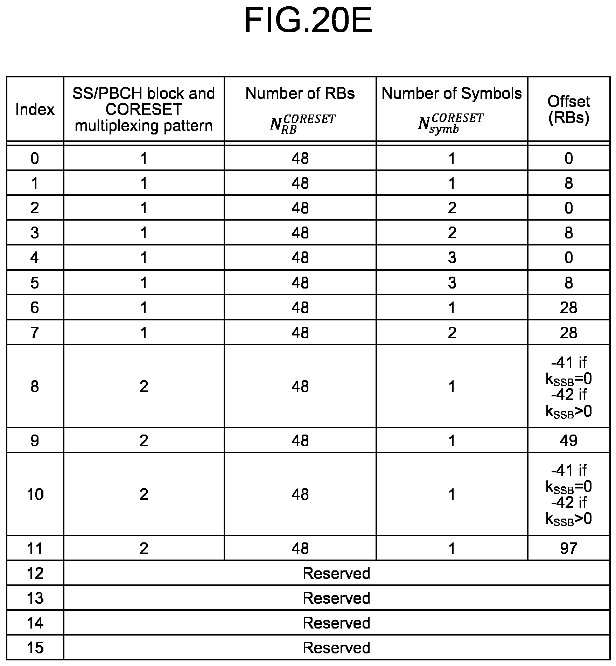

In a case where the SCSs of the SS/PBCH block and the PDCCH are 120 kHz and 60 kHz, respectively, the second terminal device 40B refers to a table in which the number of RBs of the CORESET is set to 48 or less. As an example, the second terminal device 40B refers to the table illustrated in FIG. 20E. Note that the table illustrated in FIG. 20E is the same as the table illustrated in FIG. 7I except that the number of RBs of Indexes 10 and 11 is 48.

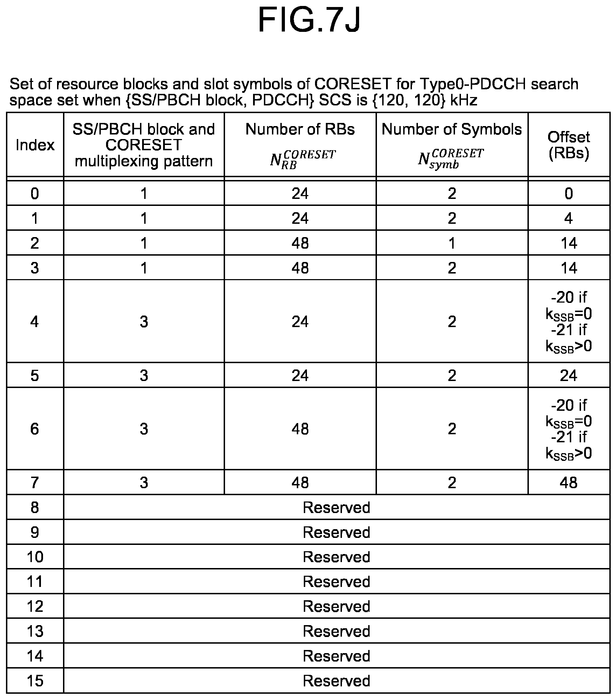

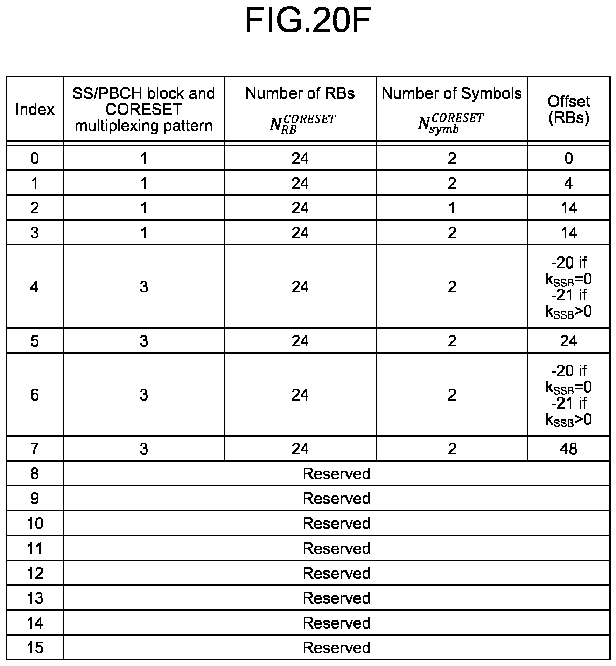

In a case where the SCSs of the SS/PBCH block and the PDCCH are 120 kHz and 120 kHz, respectively, the second terminal device 40B refers to a table in which the number of RBs of the CORESET is set to 24 or less. As an example, the second terminal device 40B refers to the table illustrated in FIG. 20F. Note that the table illustrated in FIG. 20F is the same as the table illustrated in FIG. 7J except that the number of RBs of Indexes 2, 3, 6, and 7 is 24.

(CORESET #0 Arrangement)

It is desirable that the first CORESET #0 and the second CORESET #0 are set in such a way as not to overlap each other. In a case of overlapping, the base station device 20 can transmit only either the first CORESET #0 or the second CORESET #0 in a slot. Therefore, it is desirable that the first CORESET #0 and the second CORESET #0 are configured in such a way as not to overlap each other in time or frequency, for example.

· Frequency Axis

For example, in a case where the first CORESET #0 and the second CORESET #0 are configured in such a way as not to overlap each other on the frequency axis, the base station device 20 applies a common offset (RBs) to the first CORESET #0 and the second CORESET #0.

Alternatively, the table may be defined in such a way that the offset (RBs) of the table of the CORESET for the Type0-PDCCH search space set is different between the first CORESET #0 and the second CORESET #0. In this case, in the second table, a frequency offset that does not overlap with the first CORESET #0 is defined.

· Time Axis

For example, in a case where the first CORESET #0 and the second CORESET #0 are configured in such a way as not to overlap each other on the time axis, the base station device 20 applies a common slot offset.

Alternatively, the table may be defined in such a way that "O" in the table of the CORESET for the Type0-PDCCH search space set is different between the first CORESET #0 and the second CORESET #0. In this case, in the second table, a slot of a PDCCH monitoring occasion different from the first CORESET #0 is set.

<Individual SS/PBCH Block>

In the above example, a case where the first and second terminal devices 40A and 40B receive the same SS/PBCH block has been described, but the present disclosure is not limited thereto. The first and second terminal devices 40A and 40B may receive different SS/PBCH blocks.

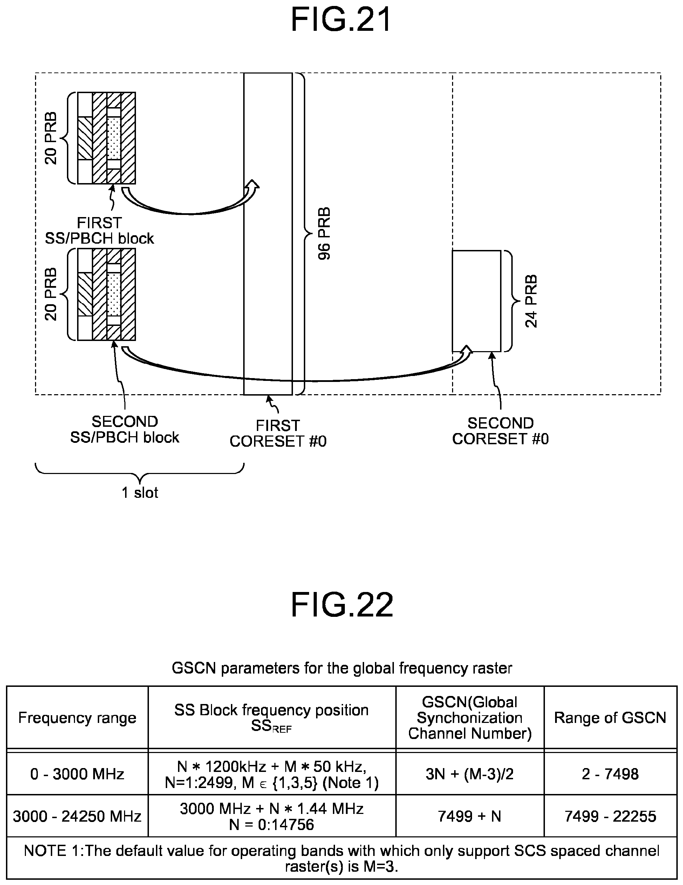

FIG. 21 is a diagram for describing a method of indicating the CORESET #0 according to the embodiment of the present disclosure. As illustrated in FIG. 21, in this case, the first terminal device 40A receives the first SS/PBCH block, and the second terminal device 40B receives the second SS/PBCH block.

The first SS/PBCH block includes information indicating the first CORESET #0, and the second SS/PBCH block includes information indicating the second CORESET #0.

As described above, the first SS/PBCH for the first terminal device 40A and the second SS/PBCH for the second terminal device 40B are transmitted, so that the first and second terminal devices 40A and 40B can receive the first CORESET #0 and the second CORESET #0, respectively.

Here, the first SS/PBCH and the second SS/PBCH are desirably transmitted at different center frequencies as illustrated in FIG. 21.

For the first SS/PBCH and the second SS/PBCH, it is desirable that a connection prohibition (barring) mechanism is introduced for each of the second terminal device 40B and the first terminal device 40A.

(Synchronization Raster)

As one of the methods for preventing the first terminal device 40A from being connected to the second SS/PBCH, there is a method of arranging the second SS/PBCH in a synchronization raster different from that of the first terminal device 40A.

By arranging the second SS/PBCH block for the second terminal device 40B at a frequency position different from the synchronization raster of the first terminal device 40A in this manner, the first terminal device 40A does not perform cell search on the second SS/PBCH block. Therefore, it is difficult for the first terminal device 40A to detect the second SS/PBCH block.

FIG. 22 is a diagram illustrating an example of parameters related to the synchronization raster. The first SS/PBCH block can be arranged at an SS Block frequency position shown in the table in FIG. 22.

On the other hand, the synchronization raster of the second terminal device 40B is given a frequency offset, for example, in such a way as to be different from the synchronization raster of the first terminal device 40A. Specifically, for example, a value corresponding to the half of a raster interval is given as the frequency offset.

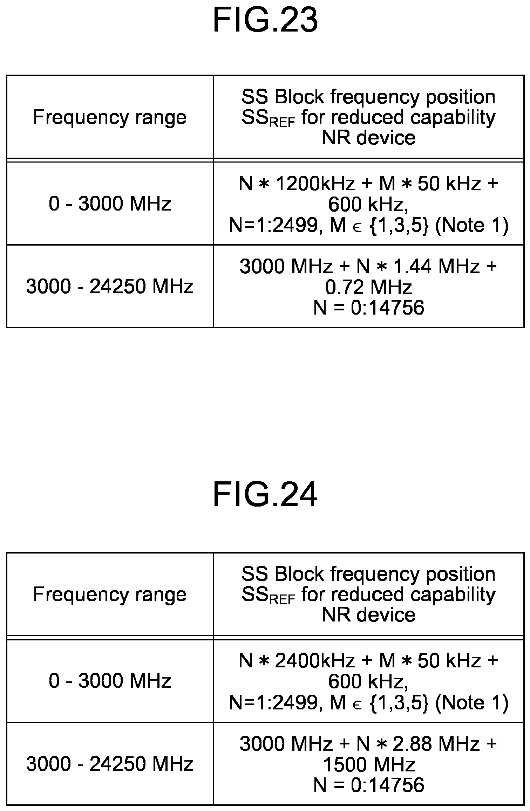

FIG. 23 is a diagram illustrating an example of parameters related to the synchronization raster according to the embodiment of the present disclosure. The second SS/PBCH block is arranged at an SS block frequency position illustrated in FIG. 23. In FIG. 23, a frequency offset of 600 kHz is given in a case where the frequency range is 3000 MHz or less, and a frequency offset of 0.72 MHz is given in a case where the frequency range is 3000 MHz or more and 24250 MHz or less.

In order to reduce the load of further cell search by the second terminal device 40B, the raster interval may be increased. FIG. 24 is a diagram illustrating another example of the parameters related to the synchronization raster according to the embodiment of the present disclosure. The second SS/PBCH block is arranged at an SS block frequency position illustrated in FIG. 24. In FIG. 24, a frequency offset of 2400 kHz is given in a case where the frequency range is 3000 MHz or less, and a frequency offset of 2.88 MHz is given in a case where the frequency range is 3000 MHz or more and 24250 MHz or less.

(Physical Configuration)

As one of the methods for preventing the first terminal device 40A from being connected to the second SS/PBCH block, there is a method in which the second SS/PBCH block has a physical configuration different from that of the first SS/PBCH block.

· Scrambling

For example, the second SS/PBCH block is scrambled differently from the first SS/PBCH block.

As an example, it is assumed that the scrambled sequence of the PBCH included in the second SS/PBCH block is different between the first SS/PBCH block and the second SS/PBCH block. As different scrambling sequences are applied, the first terminal device 40A fails to decode the PBCH included in the second SS/PBCH block. Therefore, it is possible to prevent the first terminal device 40A from being connected to the second SS/PBCH block.

As an example of application of different scrambling sequences, an initial value ($C_{init}$) for scrambling sequence generation before or after encoding of the PBCH is made different between the first SS/PBCH block and the second SS/PBCH block. For example, an initial value ($C_{init}$) for scrambled sequence generation before and after encoding of the primary PBCH for the first terminal device 40A is a cell ID. On the other hand, an initial value ($C_{init}$) for scrambled sequence generation before or after encoding of the secondary PBCH for the first terminal device 40A is a value (for example, cell ID + predetermined offset value) different from the cell ID.

In addition, as another example of application of different scrambling sequences, the head of the scrambling sequence before encoding of the PBCH is made different between the first SS/PBCH block and the second SS/PBCH block. For example, the head of the scrambled sequence before encoding of the primary PBCH is determined by the second and third LSBs of the SFN bit and the maximum number of SS/PBCH blocks. On the other hand, the head of the scrambled sequence before encoding of the secondary PBCH is determined by the second and third LSBs of the SFN bit and the maximum number of SS/PBCH blocks and a predetermined value.

In addition, as another example of application of different scrambling sequences, the head of the scrambling sequence after encoding of the PBCH is made different between the first SS/PBCH block and the second SS/PBCH block. For example, the head of the scrambled sequence after encoding of the primary PBCH is determined by the SS/PBCH block index. On the other hand, the head of the scrambled sequence after encoding of the secondary PBCH is determined by the SS/PBCH block index and a predetermined value.

By applying a scrambling sequence different from that of the first SS/PBCH block in this manner, it is possible to prevent the first terminal device 40A from being connected to the second SS/PBCH block.

Furthermore, as an example, a scrambling mask may be applied to the CRC to prevent the first terminal device 40A from being connected to the second SS/PBCH block. As scrambling is applied to the CRC bit with a predetermined mask, the first terminal device 40A fails to decode the PBCH included in the second SS/PBCH block. Therefore, it is possible to prevent the first terminal device 40A from performing cell connection using the second SS/PBCH.

As an example of a CRC mask bit sequence, the base station device 20 does not apply a mask to the CRC bit of the first SS/PBCH block, and applies a predetermined mask (for example, 000000000000000000000001) including 24 bits to the CRC bit of the second SS/PBCH block.

· Sequence

In addition to the scrambling described above, for example, different sequences may be used for the PBCH DMRS of the first SS/PBCH block and the PBCH DMRS of the second SS/PBCH block so that the first terminal device 40A cannot be connected to the second SS/PBCH block. By applying different sequences to the PBCH DMRS of the first SS/PBCH block and the PBCH DMRS of the second SS/PBCH block, the first terminal device 40A fails to demodulate the secondary PBCH. Therefore, it is possible to prevent the first terminal device 40A from being connected to the second SS/PBCH block.

As an example of application of different DMRS sequences, an initial value ($C_{init}$) for DMRS sequence generation is different between the first SS/PBCH block and the second SS/PBCH block. For example, an initial value ($C_{init}$) for DMRS sequence generation for the first terminal device 40A is determined by the SS/PBCH block index and the cell ID. On the other hand, an initial value ($C_{init}$) for DMRS sequence generation for the first terminal device 40A is a value different from the value determined by the SS/PBCH block index and the cell ID.

By applying different DMRS sequences to the first SS/PBCH block and the second SS/PBCH block, it is possible to prevent the first terminal device 40A from being connected to the second SS/PBCH block.

· Synchronization Signal

Furthermore, for example, by using different sequences for a synchronization signal for the first terminal device 40A (hereinafter, referred to as a first synchronization signal) and a synchronization signal for the second terminal device 40B (hereinafter, referred to as a second synchronization signal), the first terminal device 40A may be prevented from being connected to the second SS/PBCH block. By applying different sequences to the first synchronization signal (at least one of the PSS and the SSS) and the second synchronization signal (at least one of the PSS and the SSS), the first terminal device 40A fails to acquire the second synchronization signal. Therefore, it is possible to prevent the first terminal device 40A from being connected to the second SS/PBCH block.

As an example of application of different synchronization signal sequences, the value of the cell ID is different between the first synchronization signal and the second synchronization signal. For example, the cell ID of the first synchronization signal is set to any value from 0 to 1005, and the cell ID of the second synchronization signal is set to a value of 1006 or more.

By applying different synchronization signal sequences to the first SS/PBCH block and the second SS/PBCH block, it is possible to prevent the first terminal device 40A from being connected to the second SS/PBCH block.

(Information Notification)

As one of the methods for preventing the first terminal device 40A from being connected to the second SS/PBCH block, there is a method of notifying the first terminal device 40A of predetermined information. Examples of the predetermined information include information on barring for the first terminal device 40A and information indicating that the second SS/PBCH block is a non-cell defining SSB for the first terminal device 40A.

· Information on Barring

For example, the base station device 20 includes, in an MIB, information on barring (cellBarred) for the first terminal device 40A and notifies of the information. Specifically, an MIB for the second terminal device 40B includes the information on barring (cellBarred) for the first terminal device 40A. The information on barring is placed in the same bit as a bit in which information on barring (cellBarred) included in an MIB for the first terminal device 40A is placed.

When the second SS/PBCH block is received, the first terminal device 40A recognizes cellBarred of the SS/PBCH block and stops cell connection using the SS/PBCH block. When the second SS/PBCH block is received, the second terminal device 40B ignores the information of cellBarred of the SS/PBCH block and continues cell connection using the SS/PBCH block.

Note that information for the second terminal device 40B (at least information on the CORESET for the second terminal device 40B) is placed in a bit included in the MIB for the second terminal device 40B other than the information on barring (cellBarred) for the first terminal device 40A.

Note that the base station device 20 may notify of the information on barring by a selection bit included in the BCH.

Specifically, in a case where the selection bit indicates that the received MIB is the MIB for the first terminal device 40A, the first terminal device 40A performs cell connection using the received SS/PBCH block. On the other hand, in a case where the selected bit indicates that the received MIB is different from the MIB for the first terminal device 40A (for example, the MIB is the MIB for the second terminal device 40B), the first terminal device 40A does not perform cell connection using the received SS/PBCH block.

On the other hand, in a case where it is notified that the received MIB is the MIB for the second terminal device 40B, the second terminal device 40B performs cell connection using the received MIB. Specifically, the acquisition of the SIB is attempted using the information on the CORESET #0 included in the received MIB.

In this manner, by performing cell connection based on the information on barring, the first terminal device 40A can be prevented from being connected to the second SS/PBCH.

· Non-Cell Defining SSB Information

For example, the base station device 20 notifies of information indicating that the second SS/PBCH is a non-cell defining SS/PBCH block (SSB) for the first terminal device 40A.

The non-cell defining SSB is an SS/PBCH block that is not used for cell connection. By making notification of the non-cell defining SSB from the second SS/PBCH block, the first terminal device 40A recognizes that the second SS/PBCH block is a non-cell defining SSB and does not perform cell connection. On the other hand, the second terminal device 40B determines whether the second SS/PBCH block is a cell defining SSB or a non-cell defining SSB based on information different from non-cell defining SSB notification information.

Specifically, in a case where $K_{SSB} > 23$ in FR1, the first terminal device 40A recognizes that the detected SS/PBCH block is a non-cell defining SS/PBCH block. In FR2, in a case where $K_{SSB} > 11$, the first terminal device 40A recognizes that the detected SS/PBCH block is a non-cell defining SS/PBCH block. In this case, the first terminal device 40A determines, based on the detected MIB, that there is no CORESET #0 for the Type0-PDCCH CSS set. On the other hand, the second terminal device 40B determines whether the SS/PBCH block is a cell defining SSB or a non-cell defining SSB based on information other than $K_{SSB}$.

Note that information for the second terminal device 40B (at least information on the CORESET #0 for the second terminal device 40B) is placed in a bit other than a bit for notifying $K_{SSB}$ in the second SS/PBCH block.

(Barring of Second Terminal Device)

In the above example, the method in which the first terminal device 40A cannot be connected to the second SS/PBCH has been described, but similarly, it is desirable that the second terminal device 40B is set in such a way as not to be connected to the first SS/PBCH.

For example, in a case where the number of PRBs of the first CORESET #0 is set to be equal to or larger than the supported bandwidth of the second terminal device 40B in the CORESET configuration, the second terminal device 40B is not connected to the first SS/PBCH.

In this case, it is assumed that the second terminal device 40B is prohibited from being connected to the first SS/PBCH. In this case, the second terminal device 40B performs cell search by moving to a frequency raster different from a raster in which the first SS/PBCH is arranged.

In other words, the SS/PBCH block in which the number of PRBs of the CORESET #0 is set to be equal to or larger than the supported bandwidth of the second terminal device 40B is the first SS/PBCH block.

<3.2. RMSI (SIB1)>

An SIB1 for the second terminal device 40B (hereinafter, also referred to as a second SIB1) may be provided separately from an SIB1 for the first terminal device 40A (hereinafter, also referred to as a first SIB1). By providing the second SIB1 separately from the first SIB1, system information different from that of the first terminal device 40A is set in the second terminal device 40B. Hereinafter, a case where the second SIB1 is provided will be described.

(Configuration Example)

A configuration example of parameters of the second SIB1 will be described. The second SIB1 includes some or all of the following information included in the first SIB1.

- Information regarding cell selection (cellSelectionInfo)
- Information regarding cell access (cellAccessRelatedInfo),
- Information regarding connection establishment failure control (connEstFailureControl)
- SI scheduling information (Si-SchedulingInfo)
- Serving cell configuration (serving CellConfigCommon)
- Information regarding support of IMS emergency bearer services (Ims-Emergency Support)
- Information regarding timer and constant used by terminal (ue-TimersAndConstants)
- Information regarding access control parameter for each access category (uac-BarringInfo)
- Information indicating whether or not to use resume identifier and resume request message (useFullResumeID)

In addition to the information described above, the second SIB1 may include hyper SFN (HSFN) information. The hyper SFN is an extended SFN, and extends a range (0 to 1023) of frame numbers that can be notified by the SFN. Further, the second SIB1 may include information regarding extended discontinuous reception (eDRX).

In addition, the second SIB1 may include information indicating a position where the SS/PBCH block is actually transmitted (SSB-PositionsInBurst). For example, in a case where the first SS/PBCH block and the second SS/PBCH block are separately transmitted, information indicating a position where the first and second SS/PBCH blocks are actually transmitted (SSB-PositionsInBurst) may be transmitted. Alternatively, in a case where the secondary PBCH is provided, information indicating the actual transmission position of the secondary PBCH (SPBCH-PositionsInBurst) may be included.

In a case where the secondary PBCH is provided, some of the parameters described above may be included in the secondary PBCH instead of the second SIB1.

(Providing Method)

The second SIB1 may be provided by using one or more of the following methods.

· Second CORESET #0

The second SIB1 is provided by a CORESET (for example, the second CORESET #0) different from the first CORESET #0.

First CORESET #0 configuration is provided by the SS/PBCH block and the second CORESET #0 is provided by the SS/PBCH block or the secondary PBCH. As described above, the SS/PBCH block may be common to the first CORESET #0 and the second CORESET #0, or may be different for each of the first CORESET #0 and the second CORESET #0.

Note that the second CORESET #0 is configured to fall within the supported bandwidth of the second terminal device 40B as described above. For example, the second CORESET #0 is configured with 24 PRBs or less for 15 kHz SCS.

· Search Space

The second SIB1 is provided by a search space different from a Type0-PDCCH CSS set for the first terminal device 40A (also referred to as a first Type0-PDCCH CSS set). First Type0-PDCCH CSS set configuration is provided by the first SS/PBCH block, and a Type0-PDCCH CSS set for the second terminal device 40B (also referred to as a second Type0-PDCCH CSS set) is provided by the second SS/PBCH block or the secondary PBCH.

Note that, in a case where the secondary PBCH is provided, the cycle of the second Type0-PDCCH CSS set is preferably set to be the same as the cycle of the secondary PBCH or longer than the cycle of the secondary PBCH.

· RNTI

The second SIB1 is provided by an RNTI different from an SI-RNTI for the first terminal device 40A (hereinafter, also referred to as a first SI-RNTI). The value of the first SI-RNTI is "FFFF" in 16 digits. In this case, the value of an SI-RNTI for the second terminal device 40B (hereinafter, also referred to as a second SI-RNTI) is a value other than "FFFF " in 16 digits, that is, any value from "0001" to "FFFD".

· DCI

The second SIB1 is provided by a DCI different from a DCI for scheduling the first SIB1 (hereinafter, also referred to as a first DCI). Specifically, a parameter set of a DCI for scheduling the second SIB1 (hereinafter, also referred to as a second DCI) is different from a parameter set of the first DCI.

For example, the first DCI that schedules the first SIB1 is configured to include the following information.

- Frequency domain resource assignment
- Time domain resource assignment
- VRB-to-PRB mapping
- Modulation and coding scheme
- Redundancy version
- System information indicator
- Reserved bits

The second DCI for scheduling the second SIB1 may include, in addition to the parameter set of the first DCI described above, the number of repetitions of transmission of a PDSCH carrying the second SIB1, information regarding the SFN or HSFN (for example, a part of the information on the SFN or HSFN). Further, in a case where cross-slot scheduling is applied, the first DCI may include information regarding a slot of the PDSCH in addition to the information described above.

<3.3. RACH Procedure>

A PRACH resource for the second terminal device 40B (hereinafter, also referred to as a second PRACH resource) is configured by the second SIB1.

A validation rule of the second PRACH resource will be described below. The second PRACH resource is determined to be valid or invalid according to the following condition.

- A valid second PRACH resource is a resource on which a PRACH for the second terminal device 40B may be transmitted.
- An invalid second PRACH resource is a resource on which the PRACH for the second terminal device 40B should not be transmitted.

The second terminal device 40B selects a second PRACH resource for transmitting the PRACH for the second terminal device 40B from among valid second PRACH resources.

In a resource in which the first SS/PBCH and the second SS/PBCH overlap each other, the second PRACH resource is invalid. In this case, the arrangement of the first SS/PBCH may be notified by the second SIB1.

<3.4. Initial DL BWP>

For example, in a band having a narrow bandwidth such as a bandwidth part (BWP), in a case where a large number of second terminal devices 40B are connected to a cell, the BWP becomes congested.

Therefore, in the embodiment of the present disclosure, the second terminal device 40B can switch an initial DL BWP. The second terminal device 40B switches the initial DL BWP at an early stage, so that the congestion of the band can be eliminated.

The second terminal device 40B switches the initial DL BWP according to, for example, information on a BWP included in an RAR. Alternatively, the second terminal device 40B may perform switching to an initial DL BWP associated with the selected second PRACH resource.

In addition, in a case where the SS/PBCH to which the second terminal device 40B is connected is congested, the core network 120 may notify of the information on barring and the position of the SS/PBCH as a recommended connection destination in the second SIB1. The second terminal device 40B performs cell reconnection to the SS/PBCH as the recommended connection destination based on the notified information.

Here, notification of the information on barring and the information on the recommended connection destination is made using an intra-frequency cell reselection mechanism. For example, notification of the information on the recommended connection destination according to a terminal type (a conventional device or a low-capability NR device) is made with respect to conventional intra-frequency cell reselection.

<3.5. Configuration Example of Secondary PBCH>

Here, a physical configuration example of the above-described secondary PBCH will be described.

(Configuration)

The secondary PBCH includes an encoded additional MIB (MIB2 or MIB for a low-capability NR device) (hereinafter, also referred to as the second MIB) and a DMRS used for demodulating a payload of the secondary PBCH.

As described above, the second MIB includes at least configuration information of the second CORESET #0. Further, the secondary PBCH (the second MIB, the secondary PBCH payload, and/or the physical parameter of the secondary PBCH) may include the following information.

- Connection prohibition (barring) information for predetermined terminal device 40 (for example, terminal device 40 other than second terminal device 40B).
- Information regarding QCL with SIB (Type0-DMRS and PDSCH DMRS of PDCCH)
- Extended bit (spare bit or reserved bit) for forward compatibility
- Information regarding initial DL bandwidth part (or default DL bandwidth part) for second terminal device 40B
- TDD configuration (information on uplink, downlink, and flexible symbols)
- Information on whether or not SSB is non-cell defining SSB and frequency position of cell-defining SSB
- Information regarding paging of second terminal device 40B
- Information regarding cell selection for second terminal device 40B
- Information regarding DRX of second terminal device 40B
- Information on extended SFN (for example, hyper SFN)
- Number of transmitting antenna ports of secondary PBCH and SIB.

The information regarding the QCL with the SIB may include, for example, the number of repetitions of transmission (repetition level) of the SIB1 and information regarding the state of QCL of the secondary PBCH and the SIB, and may be notified using, for example, a TCI state. Further, the information regarding the DRX can include a DRX cycle and a DRX period.

Physical parameters of the secondary PBCH include a CRC scrambling mask of the secondary PBCH, a scrambling sequence of the secondary PBCH payload, a resource position of the secondary PBCH, and the like. Specifically, the number of transmitting antenna ports of the secondary PBCH and the information on the extended SFN are notified according to the pattern of the CRC scrambling mask of the secondary PBCH.

Note that some of the above parameters are not included in the secondary PBCH, but may be included in the second SIB1.

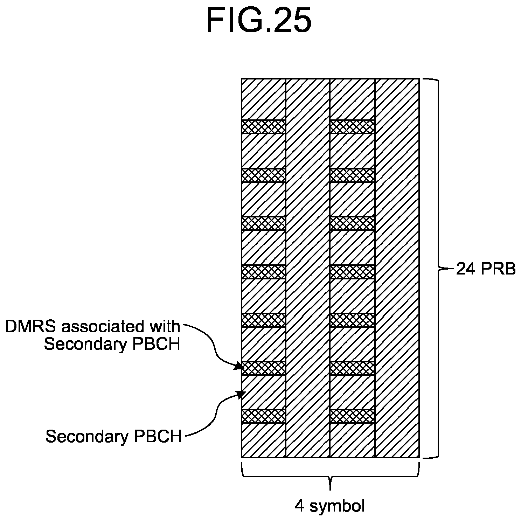

FIG. 25 is a diagram illustrating a configuration example of the secondary PBCH according to the embodiment of the present disclosure. The secondary PBCH is configured with a maximum supported bandwidth or less for the second terminal device 40B. For example, the secondary PBCH includes 24 PRBs or less (24 PRBs in FIG. 25).

In the secondary PBCH, a symbol is determined according to the amount of information and a coding rate of the second MIB. As an example, the secondary PBCH includes two symbols, and a 24-bit second MIB is transmitted. In a case where the amount of information transmitted on the secondary PBCH is small, the secondary PBCH may include one symbol. In a case where the amount of information transmitted on the secondary PBCH is large or in a case where a low coding rate is required, the secondary PBCH may include four symbols or seven symbols. Note that the number of symbols of the secondary PBCH may be notified from the SS/PBCH block.

As illustrated in FIG. 25, the secondary PBCH is transmitted together with a reference signal (DMRS) for demodulating the secondary PBCH. For example, the DMRS is placed every 4 REs on the frequency axis. The DMRS of the secondary PBCH does not have to be included in all symbols. Meanwhile, a demodulation delay is reduced when the DMRS is included in the first symbol, and thus, it is preferable that the DMRS is included in the first symbol. In the example of FIG. 25, the DMRS is arranged every two symbols. In the example of FIG. 25, the DMRS is included in the first symbol and the third symbol, and is not included in the second symbol and the fourth symbol.

(Cycle)

The secondary PBCH is arranged at the same cycle as the cycle of the SS/PBCH block or at a cycle longer than the cycle of the SS/PBCH block. As an example, in the initial cell selection, the secondary PBCH is arranged at the same cycle as the cycle of the SS/PBCH block. In the initial cell selection, the second terminal device 40B assumes that the secondary PBCH occurs in a cycle of two radio frames (20 subframes or 20 msec).

Note that the cycle of the secondary PBCH may be notified separately from the cycle of the SS/PBCH block. Specifically, the cycle of the secondary PBCH may be set using a parameter different from a parameter (SSB measurement timing configuration (SMTC)) for designating the cycle of the SS/PBCH block.

In addition, the secondary PBCHs arranged at the same center frequency carry the same second MIB in a predetermined period. The predetermined period is 80 msec. Note that the predetermined period may be longer than 80 msec. The predetermined period may be, for example, 160 msec or 320 msec.

In addition, the number of SS/PBCHs and the number of secondary PBCHs in one burst may be different. In other words, information on the SSB actually transmitted (ssb-PositionsInBurst) and information on the secondary PBCH actually transmitted (SPBCH-PositionsInBurst) may be individually set.

(Time/Frequency Resource)

The secondary PBCH is arranged by being frequency-division-multiplexed or time-division-multiplexed with the SS/PBCH block. Hereinafter, a method for multiplexing of the secondary PBCH and the SS/PBCH block will be described using five examples.

· Example 1

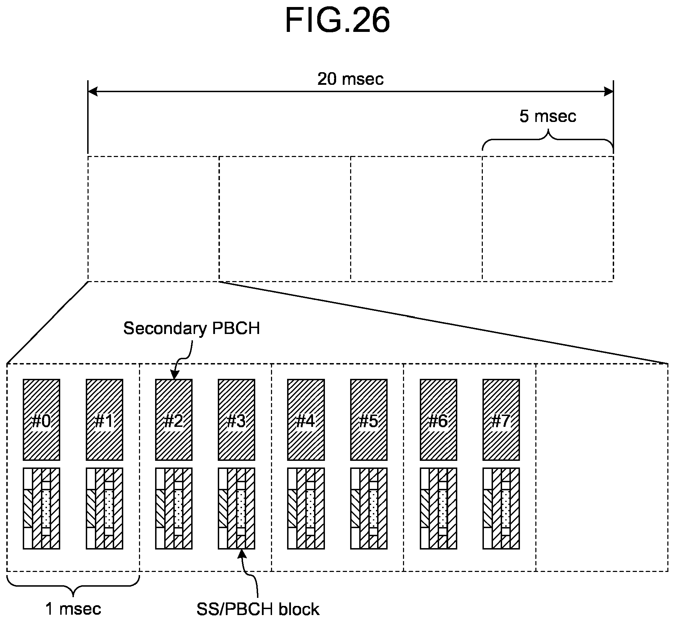

FIG. 26 is a diagram for describing an example of the method for multiplexing of the secondary PBCH and the SS/PBCH block according to the embodiment of the present disclosure. FIG. 26 illustrates a case where the SS/PBCH block and the secondary PBCH are frequency-division-multiplexed. In FIG. 26, the horizontal direction represents time, and the vertical direction represents frequency.

For example, the secondary PBCH is arranged in a different resource block in the same symbol as that of the corresponding SS/PBCH block. In the example of FIG. 26, the secondary PBCH is arranged in a resource block above the SS/PBCH block.

Note that the arrangement of the secondary PBCH is not limited to the example of FIG. 26, and for example, the secondary PBCH may be arranged in a resource block below the SS/PBCH block. The head of the resource block (or the center of the resource block or the rear of the resource block) in which the secondary PBCH is arranged may be indicated by the SS/PBCH block.

· Example 2

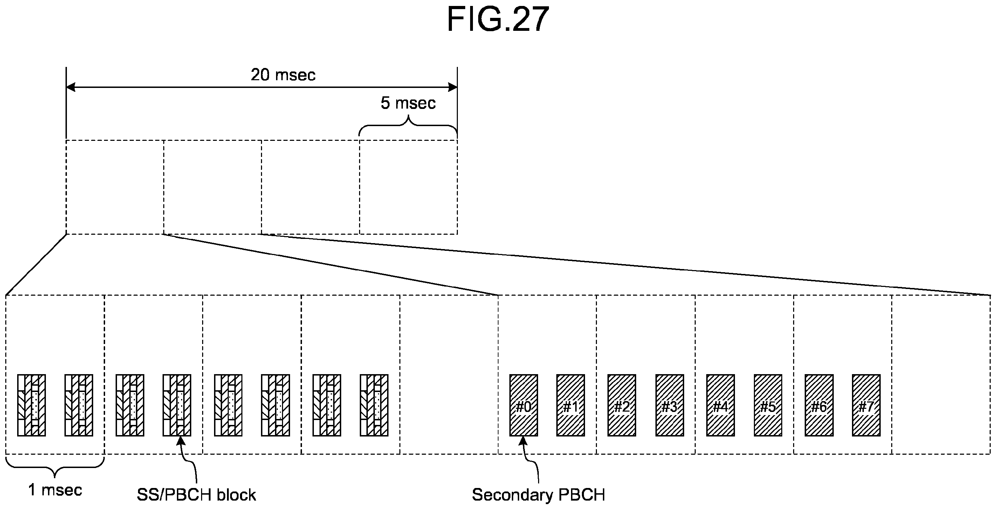

FIG. 27 is a diagram for describing another example of the method for multiplexing of the secondary PBCH and the SS/PBCH block according to the embodiment of the present disclosure. FIG. 27 illustrates a case where the SS/PBCH block and the secondary PBCH are time-division-multiplexed. In FIG. 27, the horizontal direction represents time, and the vertical direction represents frequency.

For example, the secondary PBCH is included in the next half frame of a half frame including an SS/PBCH block burst. In the example of FIG. 27, the SS/PBCH block is arranged in the first half frame of the resource in which the SS/PBCH block is arranged, and the secondary PBCH is arranged in the second half frame. Note that the half frame including the secondary PBCH may be the third half frame or the fourth half frame. Note that the half frame including the secondary PBCH may be indicated by the SS/PBCH block.

· Example 3

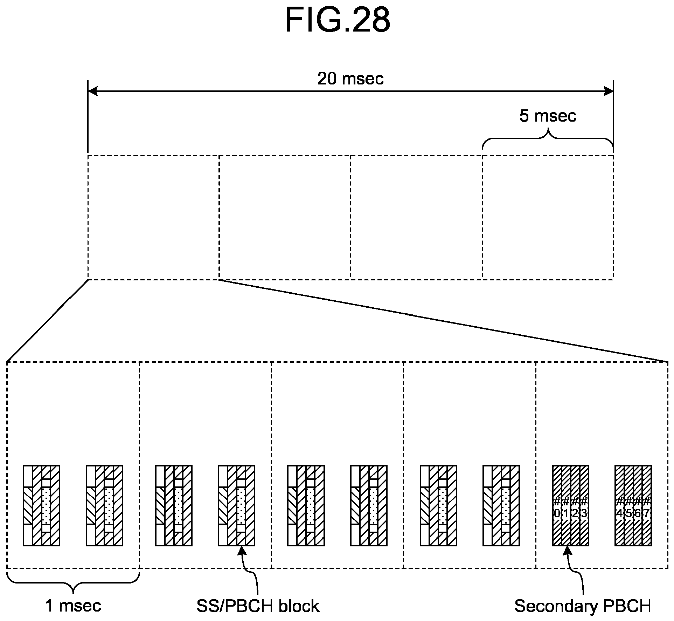

FIG. 28 is a diagram for describing another example of the method for multiplexing of the secondary PBCH and the SS/PBCH block according to the embodiment of the present disclosure. FIG. 28 illustrates a case where the SS/PBCH block and the secondary PBCH are time-division-multiplexed, and the secondary PBCH includes one symbol. In FIG. 28, the horizontal direction represents time, and the vertical direction represents frequency.

In a case where the secondary PBCH includes one symbol, as illustrated in FIG. 28, the secondary PBCH is included in a half frame including an SS/PBCH block burst. Specifically, the secondary PBCH is arranged in the fifth subframe of the half frame including the SS/PBCH block burst. Secondary PBCHs corresponding to SS/PBCH block indexes #0 to #3 are arranged in symbols #2, #3, #4, and #5, respectively, and secondary PBCHs corresponding to SS/PBCH block indexes #4 to #7 are arranged in symbols #8, #9, #10, and #11, respectively.

· Example 4

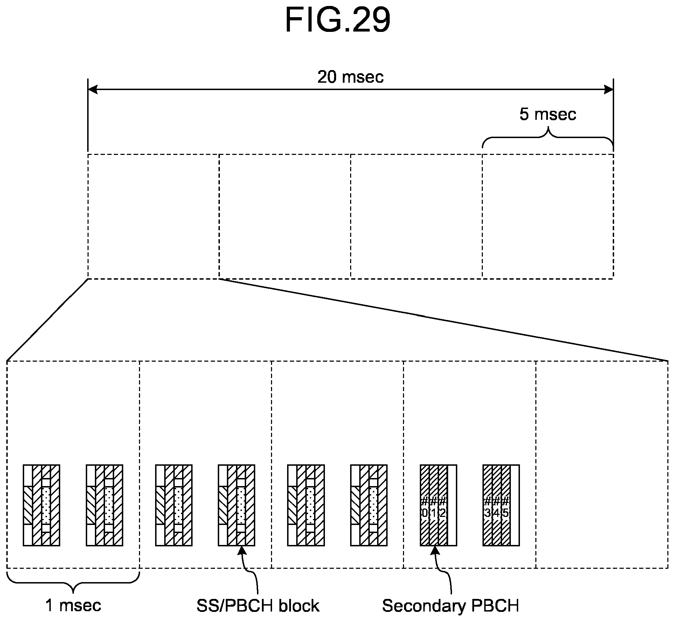

FIG. 29 is a diagram for describing another example of the method for multiplexing of the secondary PBCH and the SS/PBCH block according to the embodiment of the present disclosure. FIG. 29 illustrates a case where the SS/PBCH block and the secondary PBCH are time-division-multiplexed, and the secondary PBCH includes one symbol. In FIG. 29, the horizontal direction represents time, and the vertical direction represents frequency.

As another example of Example 3, some SS/PBCH blocks do not have to be transmitted, and the secondary PBCH may be transmitted using the resources. In this case, as illustrated in FIG. 29, SS/PBCH blocks #6 and #7 are not transmitted, and instead, six secondary PBCHs corresponding to the SS/PBCH block indexes #0 to #5 are transmitted.

· Example 5

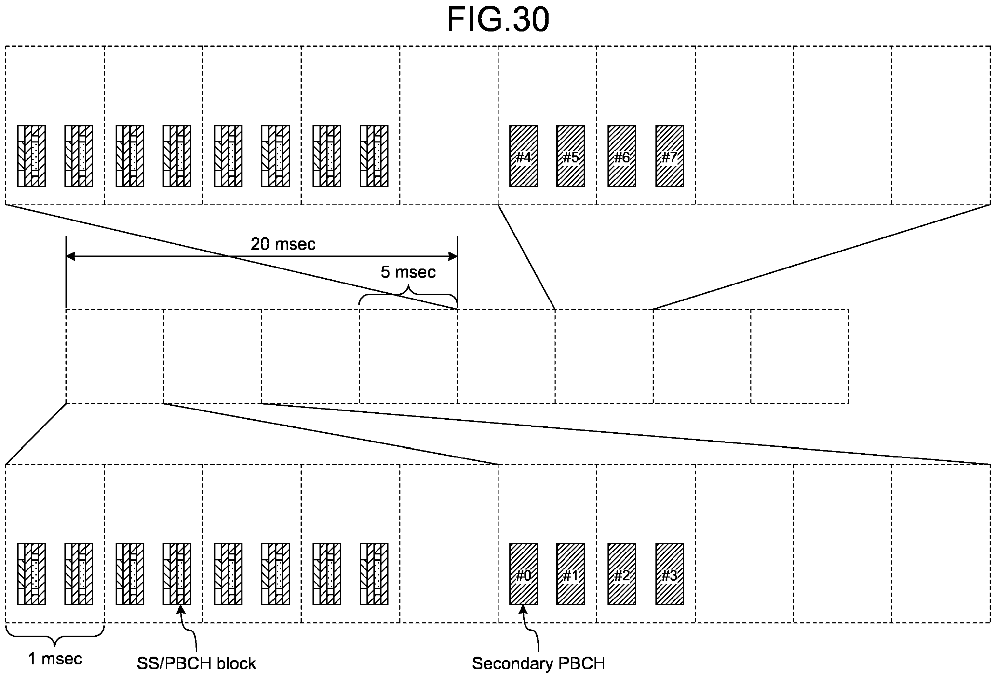

FIG. 30 is a diagram for describing another example of the method for multiplexing of the secondary PBCH and the SS/PBCH block according to the embodiment of the present disclosure. FIG. 30 illustrates a case where the SS/PBCH block and the secondary PBCH are time-division-multiplexed, and the SS/PBCH block and the secondary PBCH have different cycles. In FIG. 30, the horizontal direction represents time, and the vertical direction represents frequency.

In this example, the cycle of the SS/PBCH block is set to 20 msec, and the cycle of the secondary PBCH is set to 40 msec. In this case, secondary PBCHs corresponding to SS/PBCH block indexes #0 to #3 are arranged in the sixth and seventh subframes of the first cycle of the SS/PBCH block. Secondary PBCHs corresponding to SS/PBCH block indexes #4 to #7 are arranged in the sixth and seventh subframes (26th and 27th subframes from the head) of the second cycle of the SS/PBCH block.

(Precoding)

Random precoding may be applied to the transmission of the secondary PBCH. Specifically, different precoding may be applied between predetermined resources (for example, six PRBs and one symbol or 24 PRBs and four symbols) in the secondary PBCH to perform transmission. The second terminal device 40B attempts to demodulate the precoded secondary PBCH by using a DMRS included in the predetermined resource. Different precoding is applied to different secondary PBCHs by random precoding. The second terminal device 40B does not assume that the same precoding is applied to two different secondary PBCHs.

Space frequency block coding (SFBC) may be applied to the transmission of the secondary PBCH. For example, in a case of two antenna ports, precoding shown in Formula (1) is applied to the secondary PBCH.
[Math.1]

$$\begin{bmatrix} y^{(0)}(2i) \\ y^{(1)}(2i) \\ y^{(0)}(2i+1) \\ y^{(1)}(2i+1) \end{bmatrix} = \frac{1}{\sqrt{2}} \begin{bmatrix} 1 & 0 & j & 0 \\ 0 & -1 & 0 & j \\ 0 & 1 & 0 & j \\ 1 & 0 & -j & 0 \end{bmatrix} \begin{bmatrix} Re\left(x^{(0)}(i)\right) \\ Re\left(x^{(1)}(i)\right) \\ Im\left(x^{(0)}(i)\right) \\ Im\left(x^{(1)}(i)\right) \end{bmatrix} \qquad (1)$$

For example, in a case of four antenna ports, precoding shown in Formula (2) is applied to the secondary PBCH.
[Math.2]

$$\begin{bmatrix} y^{(0)}(4i) \\ y^{(1)}(4i) \\ y^{(2)}(4i) \\ y^{(3)}(4i) \\ y^{(0)}(4i+1) \\ y^{(1)}(4i+1) \\ y^{(2)}(4i+1) \\ y^{(3)}(4i+1) \\ y^{(0)}(4i+2) \\ y^{(1)}(4i+2) \\ y^{(2)}(4i+2) \\ y^{(3)}(4i+2) \\ y^{(0)}(4i+3) \\ y^{(1)}(4i+3) \\ y^{(2)}(4i+3) \\ y^{(3)}(4i+3) \end{bmatrix} = \frac{1}{\sqrt{2}} \begin{bmatrix} 1 & 0 & 0 & 0 & j & 0 & 0 & 0 \\ 0 & 0 & 0 & 0 & 0 & 0 & 0 & 0 \\ 0 & -1 & 0 & 0 & 0 & j & 0 & 0 \\ 0 & 0 & 0 & 0 & 0 & 0 & 0 & 0 \\ 0 & 1 & 0 & 0 & 0 & j & 0 & 0 \\ 0 & 0 & 0 & 0 & 0 & 0 & 0 & 0 \\ 1 & 0 & 0 & 0 & -j & 0 & 0 & 0 \\ 0 & 0 & 0 & 0 & 0 & 0 & 0 & 0 \\ 1 & 0 & 0 & 0 & -j & 0 & 0 & 0 \\ 0 & 0 & 0 & 0 & 0 & 0 & 0 & 0 \\ 0 & 0 & 1 & 0 & 0 & 0 & j & 0 \\ 0 & 0 & 0 & 0 & 0 & 0 & 0 & 0 \\ 0 & 0 & 0 & -1 & 0 & 0 & 0 & j \\ 0 & 0 & 0 & 0 & 0 & 0 & 0 & 0 \\ 0 & 0 & 0 & 1 & 0 & 0 & 0 & j \\ 0 & 0 & 0 & 0 & 0 & 0 & 0 & 0 \\ 0 & 0 & 1 & 0 & 0 & 0 & -j & 0 \end{bmatrix} \begin{bmatrix} Re\left(x^{(0)}(i)\right) \\ Re\left(x^{(1)}(i)\right) \\ Re\left(x^{(2)}(i)\right) \\ Re\left(x^{(3)}(i)\right) \\ Im\left(x^{(0)}(i)\right) \\ Im\left(x^{(1)}(i)\right) \\ Im\left(x^{(2)}(i)\right) \\ Im\left(x^{(3)}(i)\right) \end{bmatrix} \qquad (2)$$

(Encoding/Scrambling)

The secondary PBCH is encoded by a polar code. Note that the secondary PBCH may be encoded by other codes such as a low density parity check (LDPC) code, a convolutional code, and a turbo code. The SS/PBCH block may notify which encoding is applied.

The secondary PBCH is preferably scrambled by an SS/PBCH block index. For example, Formula (3) is applied to scrambling of the secondary PBCH.
[Math.3]

$$\tilde{b}(i) = \left(b(i) + c(i + vM_{bit})\right) mod 2 \qquad (3)$$

Here, b represents an information bit of a PBCH before scrambling, b~ represent an information bit of the PBCH after scrambling, c represents a scrambling sequence, v represents an SS/PBCH block index, and $M_{bit}$ represents an information bit number of the PBCH.

(Quasi-Co-Location (QCL))

The secondary PBCH is quasi-co-located with an SS/PBCH block. Specifically, the second terminal device 40B may assume that an SS/PBCH block having a predetermined index and a DMRS of the secondary PBCH corresponding to the predetermined index are QCL (quasi co-located) from the viewpoint of one or more of Doppler spread, Doppler shift, an average delay, delay spread, and a spatial Rx parameter.

One SS/PBCH block and one secondary PBCH may be QCL, or one SS/PBCH block and a plurality of secondary PBCHs may be QCL. In a case where one SS/PBCH block and a plurality of secondary PBCHs are QCL, the second terminal device 40B can perform soft synthesis on the plurality of secondary PBCHs.

In addition, the secondary PBCH is quasi-co-located with a PDCCH and a PDSCH for carrying the corresponding second SIB1. Specifically, the second terminal device 40B may assume that the DMRS of the secondary PBCH, and the DMRS of the PDCCH and the DMRS of the PDSCH for carrying the corresponding second SIB1 are quasi co-located (QCL) in terms of one or more of the Doppler spread, the Doppler shift, the average delay, the delay spread, and the spatial Rx parameter.

As described above, the initial access procedure can be provided to both the first and second terminal devices 40A and 40B in one carrier.

<4. Modified Example>

Some of the above-described embodiments or a part thereof may be applied to the above-described dual connectivity (for example, EUTRA-EUTRA dual connectivity, EUTRA-NR dual connectivity (ENDC), EUTRA-NR dual connectivity with 5GC, NR-EUTRA dual connectivity (NEDC), and NR-NR dual connectivity). For example, the information for receiving the second CORESET configuration (the second CORESET #0) (for example, the above-described information such as a spare bit (reserved bit or extended bit) included in a PBCH payload or an MIB, information indicating the presence of the secondary PBCH or the resource thereof, a candidate for the resource of the secondary PBCH, and the actual transmission position of the secondary PBCH) may be provided from a master node (MN) to the UE in the dual connectivity (for example, provided by using RRC signalling), while the application target of the second CORESET configuration (the second CORESET #0) may be a PDCCH provided by a secondary node (SN).

In addition or alternatively, the above-described low-capability NR device (NR-light UE) may be categorized with a plurality of levels or modes defined in the low-capability NR device (NR-light UE). Among the plurality of levels or modes, which level or mode is to be applied may be determined based on a condition (for example, low performance, low device cost, low complexity, and low power consumption) required for the first terminal device 40A (the conventional NR device (for example, normal NR UE or legacy NR UE)), or may be determined based on radio quality (for example, RSRP, RSRQ, SINR, CSI, or RSSI) or quality of service (QCI or 5QI) when the low-capability NR device operates (for example, the message information (for example, a physical channel such as RRC signalling, DCI, or PBCH) described above) or when the initial access described above is performed). Among several application method for the second CORESET configuration (the second CORESET #0) described above, which method is to be applied may be determined according to the plurality of levels or modes.

The terminal device or the base station device of the present embodiment may be implemented by a dedicated computer system or a general-purpose computer system.

For example, a communication program for performing the above-described operations is stored in a computer-readable recording medium such as an optical disk, a semiconductor memory, a magnetic tape, or a flexible disk, and distributed. Then, for example, the control device is implemented by installing the program in a computer and performing the above-described processing. At this time, the control device may be the terminal device 40, the base station device 20, or another external device (for example, a personal computer). Furthermore, the control device may be a device (for example, each control unit) inside the terminal device 40 and the base station device 20.

Further, the communication program may be stored in a disk device included in a server device on a network such as the Internet, and be downloaded to a computer. Further, the functions described above may be realized by cooperation between an operating system (OS) and application software. In this case, the part other than the OS may be stored in a medium and distributed, or the part other than the OS may be stored in the server device and downloaded to a computer.

Further, among the processing described in the above-described embodiment, all or some of the processing described as being automatically performed can be manually performed. Alternatively, all or some of the processing described as being manually performed can be automatically performed by a known method. In addition, the processing procedures, specific names, information including various data and parameters illustrated in the specification and drawings can be arbitrarily changed unless otherwise specified. For example, various pieces of information illustrated in the drawings are not limited to those illustrated in the drawings.

Further, each illustrated component of each device is functionally conceptual, and does not necessarily have to be configured physically as illustrated in the drawings. That is, the specific modes of distribution/integration of the respective devices are not limited to those illustrated in the drawings. All or some of the devices can be functionally or physically distributed/integrated in any arbitrary unit, depending on various loads or the status of use.

Further, the above-described embodiments can be appropriately combined as long as the processing contents do not contradict each other.

<<5. Conclusion>>

As described above, the preferred embodiments of the present disclosure have been described in detail with reference to the accompanying drawings, but the technical scope of the present disclosure is not limited to such examples. It will be apparent to those skilled in the art to which the present disclosure pertains that various modifications or alterations can be conceived within the scope of the technical idea described in the claims and it is naturally understood that these modifications or alterations fall within the technical scope of the present disclosure.

Furthermore, the effects described in the present specification are merely illustrative or exemplary and are not restrictive. That is, the technology according to the present disclosure can exhibit, in addition to or in place of the above-described effects, other effects obvious to those skilled in the art from the description of the present specification.

Reference Signs List

20 BASE STATION DEVICE
21 WIRELESS COMMUNICATION UNIT
24, 45 CONTROL UNIT
40 TERMINAL DEVICE
41 WIRELESS COMMUNICATION UNIT

**Claims**

1. A communication device (40) comprising:

   a communication unit (41) configured to monitor a physical broadcast channel, PBCH, to receive a signal; and
   a control unit (45) configured to determine which one of first control resource set, CORESET, configuration and second CORESET configuration is to be applied to perform communication based on one or more bits included in the signal received on the PBCH;
   **characterized in that** the communication unit (41) is configured to monitor a secondary PBCH for receiving the second CORESET configuration based on the one or more bits to receive a second signal.

2. The communication device (40) according to claim 1, wherein the second CORESET configuration is selected in a case where a maximum supported bandwidth of the communication device (40) is equal to or less than a predetermined value, and the first CORESET configuration is selected in a case where the maximum supported bandwidth is larger than the predetermined value.

3. The communication device (40) according to claim 1, wherein the number of physical resource blocks in the second CORESET configuration is smaller than the number of physical resource blocks in the first CORESET configuration.

4. The communication device (40) according to claim 1, wherein the control unit (45) is configured to determine a presence or absence of the secondary PBCH based on the one or more bits.

5. The communication device (40) according to claim 1, wherein the control unit (45) is configured to determine a resource in which the secondary PBCH is arranged based on the one or more bits.

6. The communication device (40) according to claim 1, wherein the secondary PBCH is arranged by being time-division-multiplexed or frequency-division-multiplexed with the PBCH.

7. The communication device (40) according to claim 1, wherein SystemInformationBlockType1, SIB1, used for communication performed by applying the second CORESET configuration is transmitted with the second CORESET configuration.

8. A communication system (1) comprising:

   the communication device (40) according to claim 1; and
   a second communication device (20) comprising a communication unit (21) configured to transmit, by using the PBCH, the signal including the one or more bits for determining whether a communication partner applies first CORESET configuration or second CORESET configuration to perform communication.

9. A communication method performed by a communication device and comprising:

monitoring a PBCH to receive a signal; and
determining which one of first CORESET configuration and second CORESET configuration is to be applied to perform communication based on one or more bits included in the signal received on the PBCH;
**characterized by** monitoring a secondary PBCH for receiving the second CORESET configuration based on the one or more bits to receive a second signal.

**Patentansprüche**

1. Kommunikationsvorrichtung (40), umfassend:

eine Kommunikationseinheit (41), die konfiguriert ist, um einen physischen Übertragungskanal, physical broadcast channel, PBCH, zu überwachen, um ein Signal zu empfangen; und
eine Steuereinheit (45), die konfiguriert ist, um zu ermitteln, welche einer ersten Steuerressourcensatzkonfiguration, CORESET-Konfiguration, CORESET = control resource set, und einer zweiten CORESET-Konfiguration anzuwenden ist, um Kommunikation basierend auf einem oder mehreren Bits durchzuführen, die in dem auf dem PBCH empfangenen Signal eingeschlossen sind;
**dadurch gekennzeichnet, dass** die Kommunikationseinheit (41) konfiguriert ist, um einen sekundären PBCH zu überwachen, um die zweite CORESET-Konfiguration basierend auf dem einen oder den mehreren Bits zu empfangen, um ein zweites Signal zu empfangen.

2. Kommunikationsvorrichtung (40) nach Anspruch 1, wobei die zweite CORESET-Konfiguration in einem Fall ausgewählt wird, in dem eine maximal unterstützte Bandbreite der Kommunikationsvorrichtung (40) gleich oder kleiner als ein vorgegebener Wert ist, und die erste CORESET-Konfiguration in einem Fall ausgewählt wird, in dem die maximal unterstützte Bandbreite größer als der vorgegebene Wert ist.

3. Kommunikationsvorrichtung (40) nach Anspruch 1, wobei die Anzahl der physischen Ressourcenblöcke in der zweiten CORESET-Konfiguration kleiner ist als die Anzahl der physischen Ressourcenblöcke in der ersten CORESET-Konfiguration.

4. Kommunikationsvorrichtung (40) nach Anspruch 1, wobei die Steuereinheit (45) konfiguriert ist, um ein Vorhandensein oder Fehlen des sekundären PBCH basierend auf dem einen oder den mehreren Bits zu ermitteln.

5. Kommunikationsvorrichtung (40) nach Anspruch 1, wobei die Steuereinheit (45) konfiguriert ist, um basierend auf dem einen oder den mehreren Bits eine Ressource zu ermitteln, in der der sekundäre PBCH angeordnet ist.

6. Kommunikationsvorrichtung (40) nach Anspruch 1, wobei der sekundäre PBCH durch Zeitmultiplex oder Frequenzmultiplex mit dem PBCH angeordnet ist.

7. Kommunikationsvorrichtung (40) nach Anspruch 1, wobei SystemInformationBlockTypel, SIB1, das für eine Kommunikation verwendet wird, die durch Anwenden der zweiten CORESET-Konfiguration durchgeführt wird, mit der zweiten CORESET-Konfiguration übertragen wird.

8. Kommunikationssystem (1), umfassend:

die Kommunikationsvorrichtung (40) nach Anspruch 1; und
eine zweite Kommunikationsvorrichtung (20), die eine Kommunikationseinheit (21) umfasst, die konfiguriert ist, um unter Verwendung des PBCH das Signal zu übertragen, das das eine oder die mehreren Bits zum Ermitteln einschließt, ob ein Kommunikationspartner eine erste CORESET-Konfiguration oder eine zweite CORESET-Konfiguration anwendet, um Kommunikation durchzuführen.

9. Kommunikationsverfahren, das durch eine Kommunikationsvorrichtung durchgeführt wird und umfasst:

Überwachen eines PBCH zum Empfangen eines Signals; und

Ermitteln, welche einer ersten Steuerressourcensatzkonfiguration, CORESET-Konfiguration, und einer zweiten CORESET-Konfiguration anzuwenden ist, um Kommunikation basierend auf einem oder mehreren Bits durchzuführen, die in dem auf dem PBCH empfangenen Signal eingeschlossen sind;

**gekennzeichnet durch** Überwachen eines sekundären PBCH zum Empfangen der zweiten CORESET-Konfiguration basierend auf dem einen oder den mehreren Bits, um ein zweites Signal zu empfangen.

**Revendications**

1.  Dispositif de communication (40) comprenant :

    une unité de communication (41) configurée pour surveiller un canal physique de diffusion, PBCH, afin de recevoir un signal ; et
    une unité de commande (45) configurée pour déterminer laquelle de la première configuration d'ensemble de ressources de commande, CORESET, et de la seconde configuration de CORESET doit être appliquée pour effectuer une communication sur la base d'un ou plusieurs bits inclus dans le signal reçu sur le PBCH;
    **caractérisé en ce que** l'unité de communication (41) est configurée pour surveiller un PBCH secondaire afin de recevoir la seconde configuration de CORESET sur la base du ou des bits pour recevoir un second signal.

2.  Dispositif de communication (40) selon la revendication 1, dans lequel la seconde configuration CORESET est sélectionnée dans le cas où une largeur de bande maximale prise en charge par le dispositif de communication (40) est égale ou inférieure à une valeur prédéterminée, et la première configuration de CORESET est sélectionnée dans le cas où la largeur de bande maximale prise en charge est supérieure à la valeur prédéterminée.

3.  Dispositif de communication (40) selon la revendication 1, dans lequel le nombre de blocs de ressources physiques dans la seconde configuration de CORESET est inférieur au nombre de blocs de ressources physiques dans la première configuration de CORESET.

4.  Dispositif de communication (40) selon la revendication 1, dans lequel l'unité de commande (45) est configurée pour déterminer une présence ou une absence du PBCH secondaire sur la base du ou des bits.

5.  Dispositif de communication (40) selon la revendication 1, dans lequel l'unité de commande (45) est configurée pour déterminer une ressource dans laquelle le PBCH secondaire est agencé sur la base du ou des bits.

6.  Dispositif de communication (40) selon la revendication 1, dans lequel le PBCH secondaire est agencé en étant multiplexé par répartition dans le temps ou multiplexé par répartition fréquentielle avec le PBCH.

7.  Dispositif de communication (40) selon la revendication 1, dans lequel SystemInformationBlockTypeI, SIB1, utilisé pour une communication effectuée en appliquant la seconde configuration de CORESET est transmis avec la seconde configuration de CORESET.

8.  Système de communication (1) comprenant :

    le dispositif de communication (40) selon la revendication 1 ; et
    un second dispositif de communication (20) comprenant une unité de communication (21) configurée pour transmettre, à l'aide du PBCH, le signal comportant le ou les bits permettant de déterminer si un partenaire de communication applique une première configuration de CORESET ou une seconde configuration de CORESET pour réaliser une communication.

9.  Procédé de communication effectué par un dispositif de communication et comprenant :

    la surveillance d'un PBCH pour recevoir un signal ; et
    le fait de déterminer laquelle de la première configuration de CORESET et de la seconde configuration de CORESET doit être appliquée pour réaliser une communication sur la base d'un ou plusieurs bits inclus dans le signal reçu sur le PBCH;
    **caractérisé par** la surveillance d'un PBCH secondaire pour recevoir la seconde configuration de CORESET sur la base du ou des bits pour recevoir un second signal.

# FIG.1

EP 4 152 850 B1

# FIG.2

127 RE

20 PRB

PBCH

PSS        SSS

# FIG.3

# FIG.4

```
MIB ::=                              SEQUENCE {
    systemFrameNumber                    BIT STRING (SIZE (6)),
    subCarrierSpacingCommon              ENUMERATED {scs15or60, scs30or120},
    ssb-SubcarrierOffset                 INTEGER (0..15),
    dmrs-TypeA-Position                  ENUMERATED {pos2, pos3},
    pdcch-ConfigSIB1                     PDCCH-ConfigSIB1,
    cellBarred                           ENUMERATED {barred, notBarred},
    intraFreqReselection                 ENUMERATED {allowed, notAllowed},
    spare                                BIT STRING (SIZE (1))
}
```

# FIG.5

| MIB field descriptions |
| --- |
| **cellBarred**<br>Value barred means that the cell is barred, as defined in TS 38.304 [20]. |
| **dmrs-TypeA-Position**<br>Position of (first) DM-RS for downlink (see TS 38.211 [16], clause 7.4.1.1.2) and uplink (see TS 38.211 [16], clause 6.4.1.1.3). |
| **intraFreqReselection**<br>Controls cell selection/reselection to intra-frequency cells when the highest ranked cell is barred, or treated as barred by the UE, as specified in TS 38.304 [20]. |
| **pdcch-ConfigSIB1**<br>Determines a common ControlResourceSet (CORESET), a common search space and necessary PDCCH parameters. If the field ssb-SubcarrierOffset indicates that SIB1 is absent, the field pdcch-ConfigSIB1 indicates the frequency positions where the UE may find SS/PBCH block with SIB1 or the frequency range where the network does not provide SS/PBCH block with SIB1 (see TS 38.213 [13], clause 13). |
| **ssb-SubcarrierOffset**<br>Corresponds to $k_{SSB}$ (see TS 38.213 [13]), which is the frequency domain offset between SSB and the overall resource block grid in number of subcarriers. (See TS 38.211 [16], clause 7.4.3.1).<br>The value range of this field may be extended by an additional most significant bit encoded within PBCH as specified in TS 38.213 [13].<br>This field may indicate that this cell does not provide SIB1 and that there is hence no CORESET#0 configured in MIB (see TS 38.213 [13], clause 13). In this case, the field pdcch-ConfigSIB1 may indicate the frequency positions where the UE may (not) find a SS/PBCH with a control resource set and search space for SIB1 (see TS 38.213 [13], clause 13). |
| **subCarrierSpacingCommon**<br>Subcarrier spacing for SIB1, Msg.2/4 for initial access, paging and broadcast SI-messages. If the UE acquires this MIB on an FR1 carrier frequency, the value scs15or60 corresponds to 15 kHz and the value scs30or120 corresponds to 30 kHz. If the UE acquires this MIB on an FR2 carrier frequency, the value scs15or60 corresponds to 60 kHz and the value scs30or120 corresponds to 120 kHz. |
| **systemFrameNumber**<br>The 6 most significant bits (MSB) of the 10-bit System Frame Number (SFN). The 4 LSB of the SFN are conveyed in the PBCH transport block as part of channel coding (i.e. outside the MIB encoding), as defined in clause 7.1 in TS 38.212 [17]. |

# FIG.6

```
-- ASN1START
-- TAG-BCCH-BCH-MESSAGE-START

BCCH-BCH-Message ::=          SEQUENCE {
    message                            BCCH-BCH-MessageType
}

BCCH-BCH-MessageType ::=      CHOICE {
    mib                              MIB,
    messageClassExtension          SEQUENCE {}
}

-- TAG-BCCH-BCH-MESSAGE-STOP
-- ASN1STOP
```

# FIG.7A

Set of resource blocks and slot symbols of CORESET for Type0-PDCCH search space set when {SS/PBCH block, PDCCH} SCS is {15, 15} kHz for frequency bands with minimum channel bandwidth 5 MHz or 10 MHz

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 24 | 2 | 0 |
| 1 | 1 | 24 | 2 | 2 |
| 2 | 1 | 24 | 2 | 4 |
| 3 | 1 | 24 | 3 | 0 |
| 4 | 1 | 24 | 3 | 2 |
| 5 | 1 | 24 | 3 | 4 |
| 6 | 1 | 48 | 1 | 12 |
| 7 | 1 | 48 | 1 | 16 |
| 8 | 1 | 48 | 2 | 12 |
| 9 | 1 | 48 | 2 | 16 |
| 10 | 1 | 48 | 3 | 12 |
| 11 | 1 | 48 | 3 | 16 |
| 12 | 1 | 96 | 1 | 38 |
| 13 | 1 | 96 | 2 | 38 |
| 14 | 1 | 96 | 3 | 38 |
| 15 | Reserved | | | |

# FIG.7B

Set of resource blocks and slot symbols of CORESET for Type0-PDCCH search space set when {SS/PBCH block, PDCCH} SCS is {15, 15} kHz for frequency bands operated with shared spectrum channel access

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 96 | 1 | 10 |
| 1 | 1 | 96 | 1 | 12 |
| 2 | 1 | 96 | 1 | 14 |
| 3 | 1 | 96 | 1 | 16 |
| 4 | 1 | 96 | 2 | 10 |
| 5 | 1 | 96 | 2 | 12 |
| 6 | 1 | 96 | 2 | 14 |
| 7 | 1 | 96 | 2 | 16 |
| 8 | Reserved | | | |
| 9 | Reserved | | | |
| 10 | Reserved | | | |
| 11 | Reserved | | | |
| 12 | Reserved | | | |
| 13 | Reserved | | | |
| 14 | Reserved | | | |
| 15 | Reserved | | | |

# FIG.7C

Set of resource blocks and slot symbols of CORESET for Type0-PDCCH search space set when {SS/PBCH block, PDCCH} SCS is {15, 30} kHz for frequency bands with minimum channel bandwidth 5 MHz or 10 MHz

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 24 | 2 | 5 |
| 1 | 1 | 24 | 2 | 6 |
| 2 | 1 | 24 | 2 | 7 |
| 3 | 1 | 24 | 2 | 8 |
| 4 | 1 | 24 | 3 | 5 |
| 5 | 1 | 24 | 3 | 6 |
| 6 | 1 | 24 | 3 | 7 |
| 7 | 1 | 24 | 3 | 8 |
| 8 | 1 | 48 | 1 | 18 |
| 9 | 1 | 48 | 1 | 20 |
| 10 | 1 | 48 | 2 | 18 |
| 11 | 1 | 48 | 2 | 20 |
| 12 | 1 | 48 | 3 | 18 |
| 13 | 1 | 48 | 3 | 20 |
| 14 | Reserved | | | |
| 15 | Reserved | | | |

# FIG.7D

Set of resource blocks and slot symbols of CORESET for Type0-PDCCH search space set when {SS/PBCH block, PDCCH} SCS is {30, 15} kHz for frequency bands with minimum channel bandwidth 5 MHz or 10 MHz

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 48 | 1 | 2 |
| 1 | 1 | 48 | 1 | 6 |
| 2 | 1 | 48 | 2 | 2 |
| 3 | 1 | 48 | 2 | 6 |
| 4 | 1 | 48 | 3 | 2 |
| 5 | 1 | 48 | 3 | 6 |
| 6 | 1 | 96 | 1 | 28 |
| 7 | 1 | 96 | 2 | 28 |
| 8 | 1 | 96 | 3 | 28 |
| 9 | Reserved | | | |
| 10 | Reserved | | | |
| 11 | Reserved | | | |
| 12 | Reserved | | | |
| 13 | Reserved | | | |
| 14 | Reserved | | | |
| 15 | Reserved | | | |

# FIG.7E

Set of resource blocks and slot symbols of CORESET for Type0-PDCCH search space set when {SS/PBCH block, PDCCH} SCS is {30, 30} kHz for frequency bands with minimum channel bandwidth 5 MHz or 10 MHz

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 24 | 2 | 0 |
| 1 | 1 | 24 | 2 | 1 |
| 2 | 1 | 24 | 2 | 2 |
| 3 | 1 | 24 | 2 | 3 |
| 4 | 1 | 24 | 2 | 4 |
| 5 | 1 | 24 | 3 | 0 |
| 6 | 1 | 24 | 3 | 1 |
| 7 | 1 | 24 | 3 | 2 |
| 8 | 1 | 24 | 3 | 3 |
| 9 | 1 | 24 | 3 | 4 |
| 10 | 1 | 48 | 1 | 12 |
| 11 | 1 | 48 | 1 | 14 |
| 12 | 1 | 48 | 1 | 16 |
| 13 | 1 | 48 | 2 | 12 |
| 14 | 1 | 48 | 2 | 14 |
| 15 | 1 | 48 | 2 | 16 |

# FIG.7F

Set of resource blocks and slot symbols of CORESET for Type0-PDCCH search space set when {SS/PBCH block, PDCCH} SCS is {30, 30} kHz for frequency bands operated with shared spectrum channel access

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 48 | 1 | 0 |
| 1 | 1 | 48 | 1 | 1 |
| 2 | 1 | 48 | 1 | 2 |
| 3 | 1 | 48 | 1 | 3 |
| 4 | 1 | 48 | 2 | 0 |
| 5 | 1 | 48 | 2 | 1 |
| 6 | 1 | 48 | 2 | 2 |
| 7 | 1 | 48 | 2 | 3 |
| 8 | Reserved | | | |
| 9 | Reserved | | | |
| 10 | Reserved | | | |
| 11 | Reserved | | | |
| 12 | Reserved | | | |
| 13 | Reserved | | | |
| 14 | Reserved | | | |
| 15 | Reserved | | | |

# FIG.7G

Set of resource blocks and slot symbols of CORESET for Type0-PDCCH search space set when {SS/PBCH block, PDCCH} SCS is {30, 15} kHz for frequency bands with minimum channel bandwidth 40MHz

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 48 | 1 | 4 |
| 1 | 1 | 48 | 2 | 4 |
| 2 | 1 | 48 | 3 | 4 |
| 3 | 1 | 96 | 1 | 0 |
| 4 | 1 | 96 | 1 | 56 |
| 5 | 1 | 96 | 2 | 0 |
| 6 | 1 | 96 | 2 | 56 |
| 7 | 1 | 96 | 3 | 0 |
| 8 | 1 | 96 | 3 | 56 |
| 9 | Reserved | | | |
| 10 | Reserved | | | |
| 11 | Reserved | | | |
| 12 | Reserved | | | |
| 13 | Reserved | | | |
| 14 | Reserved | | | |
| 15 | Reserved | | | |

# FIG.7H

Set of resource blocks and slot symbols of CORESET for Type0-PDCCH search space set when {SS/PBCH block, PDCCH} SCS is {30, 30} kHz for frequency bands with minimum channel bandwidth 40MHz

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 24 | 2 | 0 |
| 1 | 1 | 24 | 2 | 4 |
| 2 | 1 | 24 | 3 | 0 |
| 3 | 1 | 24 | 3 | 4 |
| 4 | 1 | 48 | 1 | 0 |
| 5 | 1 | 48 | 1 | 28 |
| 6 | 1 | 48 | 2 | 0 |
| 7 | 1 | 48 | 2 | 28 |
| 8 | 1 | 48 | 3 | 0 |
| 9 | 1 | 48 | 3 | 28 |
| 10 | Reserved | | | |
| 11 | Reserved | | | |
| 12 | Reserved | | | |
| 13 | Reserved | | | |
| 14 | Reserved | | | |
| 15 | Reserved | | | |

# FIG.7I

Set of resource blocks and slot symbols of CORESET for Type0-PDCCH search space set when {SS/PBCH block, PDCCH} SCS is {120, 60} kHz

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 48 | 1 | 0 |
| 1 | 1 | 48 | 1 | 8 |
| 2 | 1 | 48 | 2 | 0 |
| 3 | 1 | 48 | 2 | 8 |
| 4 | 1 | 48 | 3 | 0 |
| 5 | 1 | 48 | 3 | 8 |
| 6 | 1 | 48 | 1 | 28 |
| 7 | 1 | 48 | 2 | 28 |
| 8 | 2 | 48 | 1 | -41 if $k_{SSB}=0$ <br> -42 if $k_{SSB}>0$ |
| 9 | 2 | 48 | 1 | 49 |
| 10 | 2 | 96 | 1 | -41 if $k_{SSB}=0$ <br> -42 if $k_{SSB}>0$ |
| 11 | 2 | 96 | 1 | 97 |
| 12 | Reserved | | | |
| 13 | Reserved | | | |
| 14 | Reserved | | | |
| 15 | Reserved | | | |

# FIG.7J

Set of resource blocks and slot symbols of CORESET for Type0-PDCCH search space set when {SS/PBCH block, PDCCH} SCS is {120, 120} kHz

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 24 | 2 | 0 |
| 1 | 1 | 24 | 2 | 4 |
| 2 | 1 | 48 | 1 | 14 |
| 3 | 1 | 48 | 2 | 14 |
| 4 | 3 | 24 | 2 | -20 if $k_{SSB}=0$ -21 if $k_{SSB}>0$ |
| 5 | 3 | 24 | 2 | 24 |
| 6 | 3 | 48 | 2 | -20 if $k_{SSB}=0$ -21 if $k_{SSB}>0$ |
| 7 | 3 | 48 | 2 | 48 |
| 8 | Reserved | | | |
| 9 | Reserved | | | |
| 10 | Reserved | | | |
| 11 | Reserved | | | |
| 12 | Reserved | | | |
| 13 | Reserved | | | |
| 14 | Reserved | | | |
| 15 | Reserved | | | |

# FIG.7K

Set of resource blocks and slot symbols of CORESET for Type0-PDCCH search space set when {SS/PBCH block, PDCCH} SCS is {240, 60} kHz

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 96 | 1 | 0 |
| 1 | 1 | 96 | 1 | 16 |
| 2 | 1 | 96 | 2 | 0 |
| 3 | 1 | 96 | 2 | 16 |
| 4 | Reserved | | | |
| 5 | Reserved | | | |
| 6 | Reserved | | | |
| 7 | Reserved | | | |
| 8 | Reserved | | | |
| 9 | Reserved | | | |
| 10 | Reserved | | | |
| 11 | Reserved | | | |
| 12 | Reserved | | | |
| 13 | Reserved | | | |
| 14 | Reserved | | | |
| 15 | Reserved | | | |

# FIG.7L

Set of resource blocks and slot symbols of CORESET for Type0-PDCCH search space set when {SS/PBCH block, PDCCH} SCS is {240, 120} kHz

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 48 | 1 | 0 |
| 1 | 1 | 48 | 1 | 8 |
| 2 | 1 | 48 | 2 | 0 |
| 3 | 1 | 48 | 2 | 8 |
| 4 | 2 | 24 | 1 | -41 if $k_{SSB}=0$ -42 if $k_{SSB}>0$ |
| 5 | 2 | 24 | 1 | 25 |
| 6 | 2 | 48 | 1 | -41 if $k_{SSB}=0$ -42 if $k_{SSB}>0$ |
| 7 | 2 | 48 | 1 | 49 |
| 8 | Reserved | | | |
| 9 | Reserved | | | |
| 10 | Reserved | | | |
| 11 | Reserved | | | |
| 12 | Reserved | | | |
| 13 | Reserved | | | |
| 14 | Reserved | | | |
| 15 | Reserved | | | |

# FIG.8A

Parameters for PDCCH monitoring occasions for Type0-PDCCH CSS
set - SS/PBCH block and CORESET multiplexing pattern 1 and FR1

| Index | O | Number of search space sets per slot | M | First symbol index |
|---|---|---|---|---|
| 0 | 0 | 1 | 1 | 0 |
| 1 | 0 | 2 | 1/2 | $\{0,$ if $i$ is even$\}$, $\{N_{symb}^{CORESET}$, if $i$ is odd$\}$ |
| 2 | 2 | 1 | 1 | 0 |
| 3 | 2 | 2 | 1/2 | $\{0,$ if $i$ is even$\}$, $\{N_{symb}^{CORESET}$, if $i$ is odd$\}$ |
| 4 | 5 | 1 | 1 | 0 |
| 5 | 5 | 2 | 1/2 | $\{0,$ if $i$ is even$\}$, $\{N_{symb}^{CORESET}$, if $i$ is odd$\}$ |
| 6 | 7 | 1 | 1 | 0 |
| 7 | 7 | 2 | 1/2 | $\{0,$ if $i$ is even$\}$, $\{N_{symb}^{CORESET}$, if $i$ is odd$\}$ |
| 8 | 0 | 1 | 2 | 0 |
| 9 | 5 | 1 | 2 | 0 |
| 10 | 0 | 1 | 1 | 1 |
| 11 | 0 | 1 | 1 | 2 |
| 12 | 2 | 1 | 1 | 1 |
| 13 | 2 | 1 | 1 | 2 |
| 14 | 5 | 1 | 1 | 1 |
| 15 | 5 | 1 | 1 | 2 |

# FIG.8B

Parameters for PDCCH monitoring occasions for Type0-PDCCH CSS
set - SS/PBCH block and CORESET multiplexing pattern 1 and FR2

| Index | O | Number of search space sets per slot | M | First symbol index |
|-------|-----|-----|-----|-----|
| 0 | 0 | 1 | 1 | 0 |
| 1 | 0 | 2 | 1/2 | {0, if $i$ is even}, {7, if $i$ is odd} |
| 2 | 2.5 | 1 | 1 | 0 |
| 3 | 2.5 | 2 | 1/2 | {0, if $i$ is even}, {7, if $i$ is odd} |
| 4 | 5 | 1 | 1 | 0 |
| 5 | 5 | 2 | 1/2 | {0, if $i$ is even}, {7, if $i$ is odd} |
| 6 | 0 | 2 | 1/2 | {0, if $i$ is even}, {$N_{symb}^{CORESET}$, if $i$ is odd} |
| 7 | 2.5 | 2 | 1/2 | {0, if $i$ is even}, {$N_{symb}^{CORESET}$, if $i$ is odd} |
| 8 | 5 | 2 | 1/2 | {0, if $i$ is even}, {$N_{symb}^{CORESET}$, if $i$ is odd} |
| 9 | 7.5 | 1 | 1 | 0 |
| 10 | 7.5 | 2 | 1/2 | {0, if $i$ is even}, {7, if $i$ is odd} |
| 11 | 7.5 | 2 | 1/2 | {0, if $i$ is even}, {$N_{symb}^{CORESET}$, if $i$ is odd} |
| 12 | 0 | 1 | 2 | 0 |
| 13 | 5 | 1 | 2 | 0 |
| 14 | Reserved | | | |
| 15 | Reserved | | | |

# FIG.8C

PDCCH monitoring occasions for Type0-PDCCH CSS set - SS/PBCH block and CORESET multiplexing pattern 2 and {SS/PBCH block, PDCCH} SCS {120, 60} kHz

| Index | PDCCH monitoring occasions (SFN and slot number) | First symbol index (k = 0, 1,..., 15) |
|---|---|---|
| 0 | $SFN_C=SFN_{SSB,i}$ $n_C=n_{SSB,i}$ | 0, 1, 6, 7 for i=4k, i=4k+1, i=4k+2, i=4k+3 |
| 1 | | Reserved |
| 2 | | Reserved |
| 3 | | Reserved |
| 4 | | Reserved |
| 5 | | Reserved |
| 6 | | Reserved |
| 7 | | Reserved |
| 8 | | Reserved |
| 9 | | Reserved |
| 10 | | Reserved |
| 11 | | Reserved |
| 12 | | Reserved |
| 13 | | Reserved |
| 14 | | Reserved |
| 15 | | Reserved |

# FIG.8D

PDCCH monitoring occasions for Type0-PDCCH CSS set - SS/PBCH block and CORESET multiplexing pattern 2 and {SS/PBCH block, PDCCH} SCS {240, 120} kHz

| Index | PDCCH monitoring occasions (SFN and slot number) | First symbol index (k = 0, 1,..., 7) |
|---|---|---|
| 0 | $SFN_C=SFN_{SSB,i}$ $n_C=n_{SSB,i}$ or $n_C=n_{SSB,i}-1$ | 0, 1, 2, 3, 0, 1 in i=8k, i=8k+1, i=8k+2, i=8k+3, i=8k+6, i=8k+7 ($n_C=n_{SSB,i}$) 12, 13 in i=8k+4, i=8k+5 ($n_C=n_{SSB,i}-1$) |
| 1 | | Reserved |
| 2 | | Reserved |
| 3 | | Reserved |
| 4 | | Reserved |
| 5 | | Reserved |
| 6 | | Reserved |
| 7 | | Reserved |
| 8 | | Reserved |
| 9 | | Reserved |
| 10 | | Reserved |
| 11 | | Reserved |
| 12 | | Reserved |
| 13 | | Reserved |
| 14 | | Reserved |
| 15 | | Reserved |

# FIG.8E

PDCCH monitoring occasions for Type0-PDCCH CSS set - SS/PBCH block and CORESET multiplexing pattern 3 and {SS/PBCH block, PDCCH} SCS {120, 120} kHz

| Index | PDCCH monitoring occasions (SFN and slot number) | First symbol index (k = 0, 1,..., 15) |
|---|---|---|
| 0 | $SFN_C=SFN_{SSB,i}$ $n_C=n_{SSB,i}$ | 4, 8, 2, 6, in i=4k, i=4k+1, i=4k+2, i=4k+3 |
| 1 | | Reserved |
| 2 | | Reserved |
| 3 | | Reserved |
| 4 | | Reserved |
| 5 | | Reserved |
| 6 | | Reserved |
| 7 | | Reserved |
| 8 | | Reserved |
| 9 | | Reserved |
| 10 | | Reserved |
| 11 | | Reserved |
| 12 | | Reserved |
| 13 | | Reserved |
| 14 | | Reserved |
| 15 | | Reserved |

# FIG.9A

# FIG.9B

# FIG.9C

# FIG.10

```
-- ASN1START

MasterInformationBlock ::=              SEQUENCE {
    dl-Bandwidth                        ENUMERATED {
                                            n6, n15, n25, n50, n75, n100},
    phich-Config                        PHICH-Config,
    systemFrameNumber                   BIT STRING (SIZE (8)),
    schedulingInfoSIB1-BR-r13               INTEGER (0..31),
    systemInfoUnchanged-BR-r15              BOOLEAN,
    spare                               BIT STRING (SIZE (4))
}

-- ASN1STOP
```

# FIG.11

20 PRB

SS/PBCH block

96 PRB

24 PRB

1 slot

FIRST
CORESET #0

SECOND
CORESET #0

# FIG.12

# FIG.13

40

TERMINAL DEVICE

41

SIGNAL PROCESSING UNIT

411

RECEPTION PROCESSING UNIT

213

| 411a | 411b | 411c | 411d |
|---|---|---|---|
| WIRELESS RECEP-TION UNIT | DEMULTI-PLEXING UNIT | DEMODU-LATION UNIT | DECODING UNIT |

412

TRANSMISSION PROCESSING UNIT

| 412d | 412c | 412b | 412a |
|---|---|---|---|
| WIRELESS TRANSMIS-SION UNIT | MULTI-PLEXING UNIT | MODU-LATION UNIT | CODING UNIT |

42

STORAGE UNIT

45

CONTROL UNIT

44

INPUT/OUTPUT UNIT

# FIG.14

# FIG.15

| $\bar{a}_{\bar{A}+6}, \bar{a}_{\bar{A}+7}$ | secondary PBCH RESOURCE |
|---|---|
| 0,0 | secondary PBCH RESOURCE A |
| 1,0 | secondary PBCH RESOURCE B |
| 0,1 | secondary PBCH RESOURCE C |
| 1,1 | secondary PBCH RESOURCE D |

# FIG.16

| $\bar{a}_{\bar{A}+6}$ | secondary PBCH RESOURCE |
|:---:|:---:|
| 0 | secondary PBCH RESOURCE A |
| 1 | secondary PBCH RESOURCE B |

# FIG.17

20 PRB

SS/PBCH block

96 PRB

24 PRB

1 slot

FIRST CORESET #0

SECOND CORESET #0

# FIG.18

| $\bar{a}_{\bar{A}+6}, \bar{a}_{\bar{A}+7}$ | SECOND CORESET #0 RESOURCE |
|---|---|
| 0,0 | CORESET #0 RESOURCE A |
| 1,0 | CORESET #0 RESOURCE B |
| 0,1 | CORESET #0 RESOURCE C |
| 1,1 | CORESET #0 RESOURCE D |

# FIG.19

| $\bar{a}_{\bar{A}+6}$ | SECOND CORESET #0 RESOURCE |
|---|---|
| 0 | CORESET #0 RESOURCE A |
| 1 | CORESET #0 RESOURCE B |

# FIG.20A

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 24 | 2 | 0 |
| 1 | 1 | 24 | 2 | 2 |
| 2 | 1 | 24 | 2 | 4 |
| 3 | 1 | 24 | 3 | 0 |
| 4 | 1 | 24 | 3 | 2 |
| 5 | 1 | 24 | 3 | 4 |
| 6 | 1 | 24 | 1 | 12 |
| 7 | 1 | 24 | 1 | 16 |
| 8 | 1 | 24 | 2 | 12 |
| 9 | 1 | 24 | 2 | 16 |
| 10 | 1 | 24 | 3 | 12 |
| 11 | 1 | 24 | 3 | 16 |
| 12 | 1 | 24 | 1 | 38 |
| 13 | 1 | 24 | 2 | 38 |
| 14 | 1 | 24 | 3 | 38 |
| 15 | Reserved | | | |

# FIG.20B

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 12 | 2 | 5 |
| 1 | 1 | 12 | 2 | 6 |
| 2 | 1 | 12 | 2 | 7 |
| 3 | 1 | 12 | 2 | 8 |
| 4 | 1 | 12 | 3 | 5 |
| 5 | 1 | 12 | 3 | 6 |
| 6 | 1 | 12 | 3 | 7 |
| 7 | 1 | 12 | 3 | 8 |
| 8 | 1 | 12 | 1 | 18 |
| 9 | 1 | 12 | 1 | 20 |
| 10 | 1 | 12 | 2 | 18 |
| 11 | 1 | 12 | 2 | 20 |
| 12 | 1 | 12 | 3 | 18 |
| 13 | 1 | 12 | 3 | 20 |
| 14 | Reserved | | | |
| 15 | Reserved | | | |

# FIG.20C

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 48 | 1 | 2 |
| 1 | 1 | 48 | 1 | 6 |
| 2 | 1 | 48 | 2 | 2 |
| 3 | 1 | 48 | 2 | 6 |
| 4 | 1 | 48 | 3 | 2 |
| 5 | 1 | 48 | 3 | 6 |
| 6 | 1 | 48 | 1 | 28 |
| 7 | 1 | 48 | 2 | 28 |
| 8 | 1 | 48 | 3 | 28 |
| 9 | Reserved | | | |
| 10 | Reserved | | | |
| 11 | Reserved | | | |
| 12 | Reserved | | | |
| 13 | Reserved | | | |
| 14 | Reserved | | | |
| 15 | Reserved | | | |

# FIG.20D

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 24 | 2 | 0 |
| 1 | 1 | 24 | 2 | 1 |
| 2 | 1 | 24 | 2 | 2 |
| 3 | 1 | 24 | 2 | 3 |
| 4 | 1 | 24 | 2 | 4 |
| 5 | 1 | 24 | 3 | 0 |
| 6 | 1 | 24 | 3 | 1 |
| 7 | 1 | 24 | 3 | 2 |
| 8 | 1 | 24 | 3 | 3 |
| 9 | 1 | 24 | 3 | 4 |
| 10 | 1 | 24 | 1 | 12 |
| 11 | 1 | 24 | 1 | 14 |
| 12 | 1 | 24 | 1 | 16 |
| 13 | 1 | 24 | 2 | 12 |
| 14 | 1 | 24 | 2 | 14 |
| 15 | 1 | 24 | 2 | 16 |

# FIG.20E

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 48 | 1 | 0 |
| 1 | 1 | 48 | 1 | 8 |
| 2 | 1 | 48 | 2 | 0 |
| 3 | 1 | 48 | 2 | 8 |
| 4 | 1 | 48 | 3 | 0 |
| 5 | 1 | 48 | 3 | 8 |
| 6 | 1 | 48 | 1 | 28 |
| 7 | 1 | 48 | 2 | 28 |
| 8 | 2 | 48 | 1 | -41 if $k_{SSB}=0$ -42 if $k_{SSB}>0$ |
| 9 | 2 | 48 | 1 | 49 |
| 10 | 2 | 48 | 1 | -41 if $k_{SSB}=0$ -42 if $k_{SSB}>0$ |
| 11 | 2 | 48 | 1 | 97 |
| 12 | Reserved | | | |
| 13 | Reserved | | | |
| 14 | Reserved | | | |
| 15 | Reserved | | | |

# FIG.20F

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 24 | 2 | 0 |
| 1 | 1 | 24 | 2 | 4 |
| 2 | 1 | 24 | 1 | 14 |
| 3 | 1 | 24 | 2 | 14 |
| 4 | 3 | 24 | 2 | -20 if $k_{SSB}=0$ -21 if $k_{SSB}>0$ |
| 5 | 3 | 24 | 2 | 24 |
| 6 | 3 | 24 | 2 | -20 if $k_{SSB}=0$ -21 if $k_{SSB}>0$ |
| 7 | 3 | 24 | 2 | 48 |
| 8 | Reserved | | | |
| 9 | Reserved | | | |
| 10 | Reserved | | | |
| 11 | Reserved | | | |
| 12 | Reserved | | | |
| 13 | Reserved | | | |
| 14 | Reserved | | | |
| 15 | Reserved | | | |

# FIG.21

FIRST
SS/PBCH block

20 PRB

96 PRB

24 PRB

20 PRB

SECOND
SS/PBCH block

FIRST
CORESET #0

SECOND
CORESET #0

1 slot

# FIG.22

GSCN parameters for the global frequency raster

| Frequency range | SS Block frequency position $SS_{REF}$ | GSCN(Global Synchonization Channel Number) | Range of GSCN |
|---|---|---|---|
| 0 - 3000 MHz | $N * 1200kHz + M * 50\ kHz$, $N=1:2499$, $M \in \{1,3,5\}$ (Note 1) | $3N + (M-3)/2$ | 2 - 7498 |
| 3000 - 24250 MHz | $3000\ MHz + N * 1.44\ MHz$ $N = 0:14756$ | $7499 + N$ | 7499 - 22255 |
| NOTE 1:The default value for operating bands with which only support SCS spaced channel raster(s) is M=3. | | | |

# FIG.23

| Frequency range | SS Block frequency position $SS_{REF}$ for reduced capability NR device |
|---|---|
| 0 - 3000 MHz | N ∗ 1200kHz + M ∗ 50 kHz + 600 kHz, N=1:2499, M ∈ {1,3,5} (Note 1) |
| 3000 - 24250 MHz | 3000 MHz + N ∗ 1.44 MHz + 0.72 MHz N = 0:14756 |

# FIG.24

| Frequency range | SS Block frequency position $SS_{REF}$ for reduced capability NR device |
|---|---|
| 0 - 3000 MHz | N ∗ 2400kHz + M ∗ 50 kHz + 600 kHz, N=1:2499, M ∈ {1,3,5} (Note 1) |
| 3000 - 24250 MHz | 3000 MHz + N ∗ 2.88 MHz + 1500 MHz N = 0:14756 |

# FIG.25

24 PRB

DMRS associated with
Secondary PBCH

Secondary PBCH

4 symbol

# FIG.26

Secondary PBCH

SS/PBCH block

1 msec

20 msec

5 msec

#0 #1 #2 #3 #4 #5 #6 #7

FIG.27

20 msec

5 msec

1 msec

SS/PBCH block

#0 #1 #2 #3 #4 #5 #6 #7

Secondary PBCH

EP 4 152 850 B1

# FIG.28

20 msec

5 msec

1 msec

SS/PBCH block

Secondary PBCH

# FIG.29

20 msec

5 msec

1 msec

SS/PBCH block

Secondary PBCH

# FIG.30

20 msec

5 msec

#4 #5 #6 #7

#0 #1 #2 #3

1 msec

SS/PBCH block

Secondary PBCH

## REFERENCES CITED IN THE DESCRIPTION

### Patent documents cited in the description

- WO 2021190510 A1
- US 2023209542 A1
- EP 3991337 A1
- US 2022304014 A1
- EP 4136913 A1
- US 2023156752 A1

### Non-patent literature cited in the description

- New SID on support of reduced capability NR devices. *3GPP TSG RAN Meeting #86*, December 2019
- NR-Lite for Rel-17 Qualcomm views. *3GPP TSG RAN Meeting #84*, June 2019
- **ERICSSON et al.** Summary of email discussion on NR-Light. *3GPP TSG RAN Meeting #85*, September 2019